(19) **Europäisches Patentamt / European Patent Office / Office européen des brevets**

(11) **EP 4 783 575 A1**

(12) **EUROPEAN PATENT APPLICATION**
published in accordance with Art. 153(4) EPC

(43) Date of publication:
**29.07.2026 Bulletin 2026/31**

(21) Application number: **23952563.7**

(22) Date of filing: **20.09.2023**

(51) International Patent Classification (IPC):
**H04N 19/117** *(2014.01)*

(52) Cooperative Patent Classification (CPC):
**H04N 19/117**

(86) International application number:
**PCT/CN2023/119981**

(87) International publication number:
**WO 2025/059901 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Luhang**
**Dongguan, Guangdong 523860 (CN)**

(74) Representative: **RGTH**
**Patentanwälte PartGmbB**
**Mönckebergstraße 11**
**20095 Hamburg (DE)**

(54) **ENCODING METHOD, DECODING METHOD, ENCODERS, DECODERS AND STORAGE MEDIUM**

(57)    Provided in the embodiments of the present application are an encoding method, a decoding method, encoders, decoders and a storage medium. The decoding method comprises: analyzing a code stream to determine first identification information and index information corresponding to a current block, the first identification information being used for indicating that a prediction mode of the current block is an extrapolation filtering-based intra prediction mode; on the basis of the index information, determining a target combination from combinations allowed to be used by the current block, the combinations allowed to be used by the current block comprising at least one combination, each combination corresponding to a reconstruction area of one type and an extrapolation filter shape, the reconstruction area being used for acquiring an extrapolation filtering coefficient, and the combinations allowed to be used by the current block corresponding to the shape and/or size of the current block; on the basis of the target combination, determining an extrapolation filtering coefficient; and, on the basis of the extrapolation filtering coefficient, performing extrapolation filtering-based intra prediction on the current block.

| | |
|---|---|
| Parsing a bitstream to determine first identification information and index information that corresponds to a current block | S1410 |
| Determining a target combination from a combination allowed by the current block according to the index information | S1420 |
| Determining an extrapolation filtering coefficient according to the target combination | S1430 |
| Performing extrapolation filtering-based intra prediction on the current block according to the extrapolation filtering coefficient | S1430 |

FIG. 14

**Description**

**TECHNICAL FIELD**

This application relates to the field of video coding, and in particular, to an encoding method, a decoding method, an encoder, a decoder, and a storage medium.

**BACKGROUND**

Inter prediction based on extrapolation filtering can improve encoding and decoding performances, so it is widely used. However, a relatively large quantity of encoding time needs to be consumed for intra prediction based on extrapolation filtering currently adopted.

**SUMMARY**

Embodiments of this application provide an encoding method, a decoding method, an encoder, a decoder, and a storage medium, so as to save encoding time. The following describes aspects involved in this application.

According to a first aspect, a decoding method is provided. The method is applied to a decoder, and the method includes: parsing a bitstream to determine first identification information and index information that corresponds to a current block, where the first identification information is used to indicate that a prediction mode of the current block is an intra prediction mode based on extrapolation filtering; determining a target combination from a combination allowed by the current block according to the index information, where the combination allowed by the current block includes at least one combination, each of the combination corresponds to one type of reconstruction area and one extrapolation filter shape, the reconstruction area is used to obtain an extrapolation filter coefficient, and the combination allowed by the current block corresponds to a shape and/or a size of the current block; determining an extrapolation filtering coefficient according to the target combination; and performing extrapolation filtering-based intra prediction on the current block according to the extrapolation filtering coefficient.

According to a second aspect, an encoding method is provided. The method is applied to an encoder, and the method includes: determining, according to a shape and/or a size of a current block, a combination allowed by the current block, where the combination allowed by the current block includes at least one combination, each of the combination corresponds to one type of reconstruction area and one extrapolation filter shape, and the reconstruction area is used to obtain an extrapolation filter coefficient; determining an extrapolation filtering coefficient according to the combination allowed by the current block; and performing extrapolation filtering- based intra prediction on the current block according to the extrapolation filtering coefficient.

According to a third aspect, a decoder is provided. The decoder includes: a decoding module, configured to parse a bitstream to determine first identification information and index information that corresponds to a current block, where the first identification information is used to indicate that a prediction mode of the current block is an intra prediction mode based on extrapolation filtering; a first determining module, configured to determine a target combination from a combination allowed by the current block according to the index information, where the combination allowed by the current block includes at least one combination, each of the combination corresponds to one type of reconstruction area and one extrapolation filter shape, the reconstruction area is used to obtain an extrapolation filter coefficient, and the combination allowed by the current block corresponds to a shape and/or a size of the current block; a second determining module, configured to determine an extrapolation filtering coefficient according to the target combination; and a prediction module, configured to perform extrapolation filtering-based intra prediction on the current block according to the extrapolation filtering coefficient.

According to a fourth aspect, a decoder is provided. The decoder includes a memory, configured to store a computer program; and a processor, configured to execute the method according to the first aspect when running the computer program.

According to a fifth aspect, an encoder is provided. The encoder includes: a first determining module, configured to determine, according to a shape and/or a size of a current block, a combination allowed by the current block, the combination allowed by the current block includes at least one combination, each of the combination corresponds to one type of reconstruction area and one extrapolation filter shape, and the reconstruction area is used to obtain an extrapolation filter coefficient; a second determining module, configured to determine an extrapolation filtering coefficient according to the combination allowed by the current block; and a prediction module, configured to perform extrapolation filtering-based intra prediction on the current block according to the extrapolation filtering coefficient.

According to a sixth aspect, an encoder is provided. The encoder includes: a memory, configured to store a computer program; and a processor, configured to execute the method according to the second aspect when running the computer program.

According to a seventh aspect, a computer readable storage medium is provided, where the computer readable storage medium stores a computer program, and when the computer program is executed, the method according to the first aspect or the second aspect is implemented.

According to an eighth aspect, a computer program product is provided, including a computer program, where the computer program is executed to implement the method according to the first aspect or the second aspect.

In embodiments of this application, a correspondence between a shape and/or a size of a current block and a combination allowed by the current block (a combination of an extrapolation filter shape and a reconstruction area) is pre-established, and in an actual encoding and decoding process, a combination allowed by the current block is determined according to the shape and/or the size of the current block, thereby being beneficial to constrain a quantity of combinations allowed by the current block, and saving encoding time.

## BRIEF DESCRIPTION OF DRAWINGS

FIG. 1 is an example diagram of a structure of a video encoder to which an embodiment of this application may be applied.

FIG. 2 is an example diagram of a structure of a video decoder to which an embodiment of this application may be applied.

FIG. 3 is an example diagram of a shape of an extrapolation filter.

FIG. 4A is an example diagram of a combination of extrapolation filter shapes and reconstruction areas.

FIG. 4B is another example diagram of a combination of extrapolation filter shapes and reconstruction areas.

FIG. 4C is another example diagram of a combination of an extrapolation filter shapes and reconstruction areas.

FIG. 5A is an example diagram of an intra prediction mode based on extrapolation filtering.

FIG. 5B is an example diagram of an intra prediction mode.

FIG. 6A is an example diagram of a manner of calculating a gradient value of a prediction block.

FIG. 6B is an example diagram of a gradient histogram of a prediction block.

FIG. 7 is an example diagram of an extrapolation filter with a nonlinear term.

FIG. 8 is another example of an extrapolation filter with a nonlinear term.

FIG. 9 is another example diagram of an extrapolation filter with a nonlinear term.

FIG. 10 is an example diagram of a reconstruction area corresponding to a narrow rectangular block.

FIG. 11 is an example diagram of a shape of an extrapolation filter according to an embodiment of this application.

FIG. 12 is an example diagram of a reconstruction area type according to an embodiment of this application.

FIG. 13A is an example diagram of a combination manner of an extrapolation filter shape and a reconstruction area type according to an embodiment of this application.

FIG. 13B is an example diagram of a combination manner of an extrapolation filter shape and a reconstruction area type according to another embodiment of this application.

FIG. 13C is an example diagram of a combination manner of an extrapolation filter shape and a reconstruction area type according to still another embodiment of this application.

FIG. 14 is a schematic flowchart of a decoding method according to an embodiment of this application.

FIG. 15 is an example diagram of a prediction manner according to an embodiment of this application.

FIG. 16 is a schematic flowchart of an encoding method according to an embodiment of this application.

FIG. 17 is a schematic structural diagram of a decoder according to an embodiment of this application.

FIG. 18 is a schematic structural diagram of a decoder according to another embodiment of this application.

FIG. 19 is a schematic structural diagram of an encoder according to an embodiment of this application.

FIG. 20 is a schematic structural diagram of an encoder according to another embodiment of this application.

## DESCRIPTION OF EMBODIMENTS

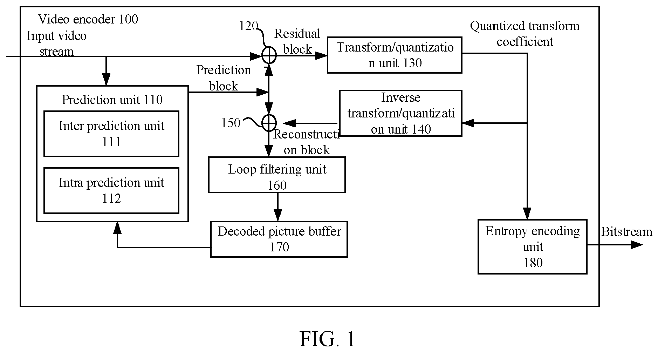

FIG. 1 is a schematic block diagram of a video encoder according to an embodiment of this application.

It should be understood that the video encoder 100 may be configured to perform lossy compression (lossy compression) on a picture, or may be configured to perform lossless compression (lossless compression) on a picture. The lossless compression may be visually lossless compression (visually lossless compression), or may be mathematically lossless compression (mathematically lossless compression).

The video encoder 100 may be applied to picture data in a (YCbCr, YUV) format. For example, a YUV ratio may be 4:2:0, 4:2:2, or 4:4:4, Y represents luma (Luma), Cb (U) represents blue chroma, Cr (V) represents red chroma, and U and V represent chroma (Chroma) for describing a color and saturation. For example, in a color format, 4:2:0 represents that every four samples have four luma components and two chroma components (YYYYCbCr), 4:2:2 represents that every four samples have four luma components and four chroma components (YYYYCbCrCbCr), and 4:4:4 represents full sample display (YYYYCbCrCbCrCbCrCbCr).

For example, the video encoder 100 reads video data and divides each picture in the video data into several coding tree units (CTU). In some examples, the CTU may be referred to as a "tree block", "Largest Coding unit (Largest Coding unit, LCU)", or "coding tree block (coding tree block, CTB)". Each CTU may be associated with pixel blocks of a same size in a picture. Each pixel block may correspond to one luma (luminance or luma) sample and two chroma (chrominance or chroma) samples. Therefore, each CTU may be associated with one luma sampling block and two chroma sampling blocks. A CTU size is, for example, $128 \times 128$, $64 \times 64$, $32 \times 32$, or the like. A CTU may be further partitioned into a plurality of coding units (Coding Unit, CU) for encoding, and each CU may be a rectangular block or a square block. A CU may be further partitioned into prediction units (prediction Unit, PU for short) and transform units (transform unit, TU for short), thereby separating encoding, prediction, and transform from each other to allow for more flexible processing. In an example, a CTU is partitioned into CUs by using a quadtree structure, and each CU is partitioned into TUs and PUs by using a quadtree structure.

Video encoders and video decoders can support various PU sizes. Assuming that a particular CU size is $2N \times 2N$, the video encoder and the video decoder may support PU sizes of $2N \times 2N$ or $N \times N$ for intra prediction, and may support symmetric PU with sizes of $2N \times 2N$, $2N \times N$, $N \times 2N$, $N \times N$, or similar sizes for inter prediction. The video encoder and the video decoder may also support asymmetric PU with sizes of $2N \times nU$, $2N \times nD$, $nL \times 2N$, and $nR \times 2N$ for inter prediction.

In some embodiments, as shown in FIG. 1, the video encoder 100 may include a prediction unit 110, a residual unit 120, a transform/quantization unit 130, an inverse transform/quantization unit 140, a reconstruction unit 150, a loop filtering unit 160, a decoded picture buffer 170, and an entropy coding unit 180. It should be noted that the video encoder 100 may include more, fewer, or different functional components.

Optionally, in this application, a current block (current block) may be referred to as a current coding unit (CU), a current prediction unit (PU), or the like. The prediction block may also be referred to as a prediction picture block or a picture prediction block, and the reconstruction picture block may also be referred to as a reconstruction block or a picture reconstruction block.

In some embodiments, the prediction unit 110 includes an inter prediction unit 111 and an intra prediction unit 112. Since there is a strong correlation between adjacent samples in a picture of a video, spatial redundancy between adjacent samples is eliminated by using an intra prediction method in a video codec technology. Because of strong similarity between adjacent pictures in a video, inter prediction is used in a video coding and decoding technology to eliminate time redundancy between adjacent pictures, thereby improving encoding efficiency.

The inter prediction unit 111 may be configured to perform inter prediction. The inter prediction may include motion estimation (motion estimation) and motion compensation (motion compensation), and may refer to picture information of different pictures. The inter prediction uses motion information to find a reference block from the reference picture, and generates a prediction block according to the reference block, so as to eliminate time redundancy. The inter prediction uses motion information to find a reference block from the reference picture, and generates a prediction block according to the reference block. The motion information includes a reference picture list in which the reference picture is located, a reference picture index, and a motion vector. The motion vector may be an integer sample or a sub-sample. If the motion vector is a sub-sample, an extrapolation filter needs to be used in the reference picture to obtain a required sub-sample block. Herein, an integer sample or a sub-sample block in the reference picture found according to the motion vector is referred to as a reference block. Some technologies directly use the reference block as a predicted block, and some technologies process the reference block to generate the predicted block. Processing the reference block to generate the predicted block may also be understood as: using the reference block as the predicted block and processing the predicted block to generate a new predicted block.

The intra prediction unit 112 predicts sample information in a current picture block by referring only to information about a same picture, so as to eliminate spatial redundancy.

There are multiple prediction modes for intra prediction. The international digital video coding standard H series are used as an example. H.264/AVC standard has eight angle prediction modes and one non-angle prediction mode, and H.265/HEVC extends to 33 angle prediction modes and 2 non-angle prediction modes. Intra prediction modes used in HEVC include a planar mode (Planar), a DC mode, and 33 angular modes, totaling 35 prediction modes. Intra modes used in VVC include a planar mode, a DC mode, and 65 angular modes, totaling 67 prediction modes.

It should be noted that, as a quantity of angular modes increases, intra prediction becomes more precise, and better meets requirements of development of high-definition and ultrahigh-definition digital videos.

The residual unit 120 may generate the residual block of the CU based on the pixel block of the CU and the prediction block of the PU of the CU. For example, the residual unit 120 may generate a residual block of a CU, so that each sample in the residual block has a value equal to a difference between the following two: a sample in a sample I block of the CU, and a corresponding sample in a prediction block of the PU of the CU.

The transform/quantization unit 130 may quantize the transform coefficients. The transform/quantization unit 130 may quantize the transform coefficients associated with the TU of the CU based on the quantization parameter (QP) values associated with the CU. The video encoder 100 may adjust a degree of quantization applied to the transform coefficients associated with the CU by adjusting the QP values associated with the CU.

The inverse transform/quantization unit 140 may apply inverse quantization and inverse transform to the quantized transform coefficients to reconstruct a residual block from the quantized transform coefficients.

The reconstruction unit 150 may add a sample of the reconstructed residual blocks to a corresponding sample of one or more prediction blocks generated by the prediction unit 110, to generate a reconstructed picture block associated with the TU. In this way, the sampling block of each TU of the CU is reconstructed, and the video encoder 100 may reconstruct the pixel block of the CU.

The loop filtering unit 160 is configured to process the inverse transformed and quantized samples to compensate for distortion information, so as to provide a better reference for subsequent encoded samples, for example, perform a deblock filtering operation to reduce a block effect of a sample block associated with a CU.

In some embodiments, the loop filtering unit 160 includes a deblock filtering unit and a sample point adaptive compensation/adaptive loop filtering (SAO/ALF) unit, where the deblock filtering unit is configured to remove the block effect and the SAO/ALF unit is configured to remove a ringing effect.

The decoded picture cache 170 may store reconstructed sample blocks. The inter prediction unit 111 may perform inter prediction on a PU of another picture by using a reference picture that includes a reconstructed pixel block. In addition, the intra prediction unit 112 may perform intra prediction on other PUs in the same picture as the CU by using the reconstructed pixel block in the decoded picture buffer 170.

The entropy coding unit 180 may receive quantized transform coefficients from transform/quantization unit 130. The entropy coding unit 180 may perform one or more entropy coding operations on the quantized transform coefficients to generate entropy encoded data.

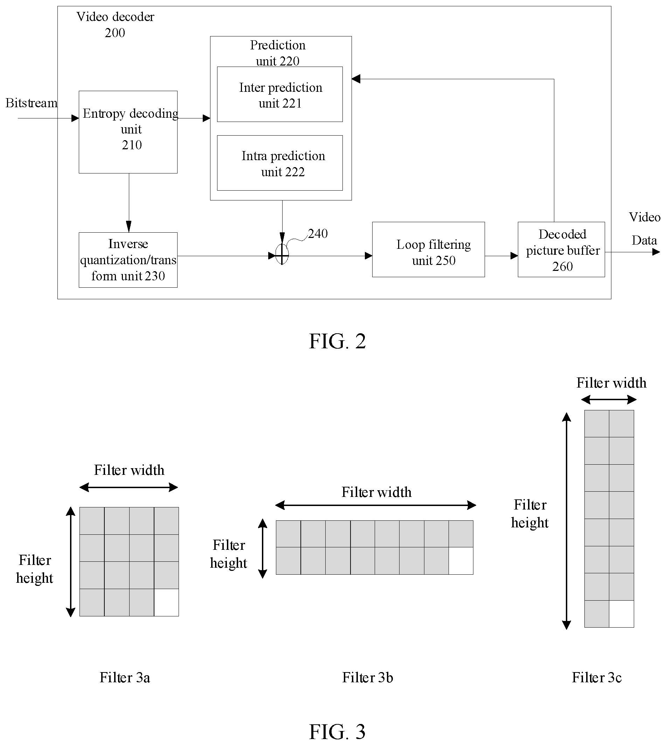

FIG. 2 is a schematic block diagram of a video decoder according to an embodiment of this application.

As shown in FIG. 2, the video decoder 200 includes an entropy decoding unit 210, a prediction unit 220, an inverse quantization/transform unit 230, a reconstruction unit 240, a loop filtering unit 250, and a decoded picture buffer 260. It should be noted that the video decoder 200 may include more, fewer, or different functional components.

The video decoder 200 may receive a bitstream. The entropy decoding unit 210 may parse the bitstream to extract syntax elements from the bitstream. As part of parsing the bitstream, the entropy decoding unit 210 may parse the entropy encoded syntax elements in the bitstream. The prediction unit 220, the inverse quantization/transform unit 230, the reconstruction unit 240, and the loop filtering unit 250 may decode the video data according to the syntax element extracted from the bitstream, that is, generate decoded video data.

In some embodiments, the prediction unit 220 includes an intra prediction unit 222 and an inter prediction unit 221.

The intra prediction unit 222 may perform intra prediction to generate a prediction block of the PU. The intra prediction unit 222 may generate a prediction block of a PU by using an intra prediction mode based on a sample block of a spatially adjacent PU. The intra prediction unit 222 may further determine the intra prediction mode of the PU according to one or more syntax elements parsed from the bitstream.

The inter prediction unit 221 may construct a first reference picture list (list 0) and a second reference picture list (list 1) according to the syntax elements parsed from the bitstream. In addition, if the PU uses inter prediction coding, the entropy decoding unit 210 may parse the motion information of the PU. The inter prediction unit 221 may determine one or more reference blocks of the PU according to the motion information of the PU. The inter prediction unit 221 may generate a prediction block of the PU according to one or more reference blocks of the PU.

The inverse quantization/transform unit 230 can inversely quantize (i.e., de-quantize) the transform coefficients associated with the TU. The inverse quantization/transform unit 230 may determine the degree of quantization using the QP value associated with the CU of the TU.

After dequantizing the transform coefficients, the inverse quantization/transform unit 230 may apply one or more inverse transforms to the dequantized transform coefficients to generate residual blocks associated with the TU.

The reconstruction unit 240 reconstructs the pixel block of the CU by using the residual block associated with the TU of the CU and the prediction block of the PU of the CU. For example, the reconstruction unit 240 may add samples of the residual block to corresponding samples of the prediction block to reconstruct the sample block of the CU, to obtain the reconstructed picture block.

The loop filtering unit 250 may perform a deblock filtering operation to reduce a block effect of a sample block associated with a CU.

The video decoder 200 may store the reconstructed picture of the CU in the decoded picture cache 260. The video decoder 200 may use the reconstructed picture in the decoded picture cache 260 as a reference picture for subsequent prediction, or transmit the reconstructed picture to a display apparatus for presentation.

A basic procedure of video coding and decoding is as follows. At an encoding end, a picture is divided into blocks. For a current block, the prediction unit 110 generates a prediction block of the current block by using intra prediction or inter prediction. The residual unit 120 may calculate a residual block based on the prediction block and an original block of the current block, that is, a difference between the prediction block and the original block of the current block, and the residual block may also be referred to as residual information. The residual block is subjected to a process such as transformation and quantization of the transform/quantization unit 130, to remove insensitive information of a human eye, so as to eliminate visual redundancy. Optionally, a residual block not subjected to transformation and quantization by the transform/quantization unit 130 may be referred to as a time domain residual block, and a time domain residual block subjected to transformation and quantization by the transform/quantization unit 130 may be referred to as a frequency residual block or a frequency domain residual block. The entropy coding unit 180 receives the quantized transform coefficient output by the transform quantization unit 130, and may perform entropy coding on the quantized transform coefficient to output a bitstream. For example, the entropy coding unit 180 may eliminate character redundancy according to a target context model and probability information of a binary bitstream.

At a decoding end, the entropy decoding unit 210 may parse a bitstream to obtain prediction information of a current block, a quantization coefficient matrix, and the like, and the prediction unit 220 generates a prediction block of the current block by performing intra prediction or inter prediction on the current block based on the prediction information. The inverse quantization/transform unit 230 performs dequantization and inverse transformation on the quantization coefficient matrix obtained from the bitstream to obtain a residual block. The reconstruction unit 240 adds the prediction block and the residual block to obtain a reconstruction block. The reconstruction block forms a reconstruction picture, and the loop filtering unit 250 performs loop filtering on the reconstruction picture based on the picture or based on the block to obtain the decoded picture. The encoding end needs to perform similar operations as the decoding end to obtain the decoded picture. The decoded picture may also be referred to as a reconstructed picture, and the reconstructed picture may be a subsequent picture as a reference picture for inter prediction.

It should be noted that block partitioning information determined by the encoding end, and mode information or parameter information such as prediction, transform, quantization, entropy encoding, and in-loop filtering, are carried in the bitstream when necessary. The decoding end determines the same block partitioning information and mode information or parameter information such as prediction, transform, quantization, entropy encoding, and in-loop filtering as the encoding end by parsing the bitstream or analyzing existing information, thereby ensuring that the decoded picture obtained at the encoding end is the same as the decoded picture obtained at the decoding end.

The foregoing describes basic processes of the video encoder and the video decoder under a block-based hybrid encoding framework. With development of technologies, some modules or steps of the framework or processes may be optimized. This application is applicable to the basic processes of the video encoder and the video decoder under the block-based hybrid encoding framework, but is not limited to the framework and processes.

The foregoing describes in detail a codec framework provided in an embodiment of this application. This application relates to an intra prediction mode based on extrapolation filtering, and may be applied to an intra prediction unit in the foregoing encoder and decoder. The following describes an intra prediction mode based on extrapolation filtering in detail.

Intra prediction based on extrapolation filtering may also be referred to as interpolated intra prediction, extrapolation filtering prediction, or extrapolation intra prediction (extrapolation intra prediction, EIP). An extrapolation filter-based intra prediction technology may obtain an extrapolation filtering coefficient (or referred to as an extrapolation filter coefficient) by using a reconstruction area (an area in which a reconstructed sample value is located) around a to-be-predicted current block, and then perform intra prediction on the current block based on the extrapolation filtering coefficient.

The extrapolation filtering-based intra prediction technology may include one or more of the following features:

First, a quantity of taps of the extrapolation filter should generally be greater than or equal to 2. The extrapolation filter may have multiple shapes, and a selected extrapolation filter shape may be controlled by using a syntax element. Second, the reconstruction area used to acquire the extrapolation filter coefficient is one or more areas around the current block, and an area used to acquire the extrapolation filter coefficient may be selected by using a syntax element.

The following describes an implementation process of an intra prediction technology based on extrapolation filtering by using an example.

First, an extrapolation filter shape and a type of reconstruction area are defined.

FIG. 3 shows three examples of extrapolation filter shapes, that is, extrapolation filter 3a, extrapolation filter 3b, and extrapolation filter 3c. As shown in FIG. 3, a shape of the extrapolation filter 3a is $4 \times 4$, that is, both a filter height (filterheight) and a filter width (filterwidth) of the extrapolation filter 3a are 4. A shape of the extrapolation filter 3b is $2 \times 8$, that is, a filter height of the extrapolation filter 3b is 2, and a filter width of the extrapolation filter 3b is 8. A shape of the extrapolation filter 3c is $8 \times 2$, that is, a filter height of the extrapolation filter 3c is 8, and a filter width of the extrapolation filter 3c is 2.

Each square in the extrapolation filter in FIG. 3 may represent one sample or sample position. A gray area represents an input position of the extrapolation filter, and a white area represents an output position of the extrapolation filter. It can be seen from FIG. 3 that the extrapolation filters 3a-3c are all 15-tap extrapolation filters, that is, the extrapolation filters 3a-3c each has 15 input positions and 1 output position.

The type of the reconstruction area may include three types: an L-shaped reconstruction area, an upper reconstruction area, and a left reconstruction area. The L-shaped reconstruction area may include reconstructed samples in the upper-left, left, lower-left, upper, and upper-right regions of the to-be-predicted block. The upper reconstruction area may include reconstructed samples in the upper-left, upper, and upper-right regions of the to-be-predicted block. The left reconstruction area includes reconstructed samples in the upper-left, left, and lower-left regions of the to-be-predicted block.

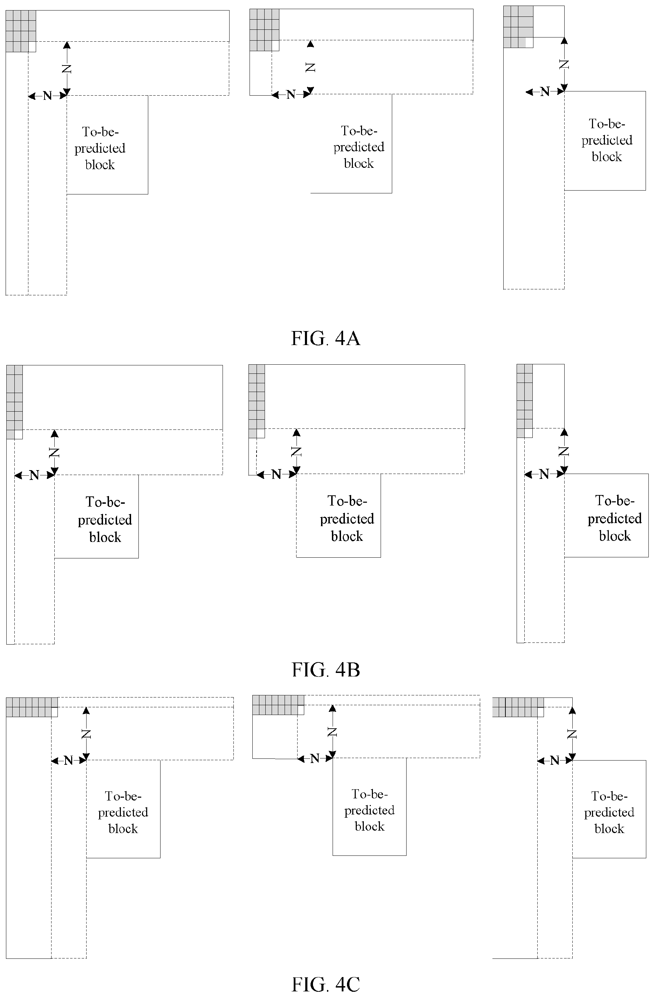

The three extrapolation filters shown in FIG. 3 may slide in the three types of reconstruction areas defined above, thereby forming nine combinations, as shown in FIG. 4A to FIG. 4C. N in FIG. 4A to FIG. 4C are variables. A value of N may be predefined, and a value of N may be related to a size of a to-be-predicted block. Each of the nine combinations may determine a set of extrapolation filtering coefficients. For example, extrapolation filtering coefficients corresponding to each of the nine combinations may be solved in the following manner: sliding the selected extrapolation filter in the selected area, thereby constructing a set of autocorrelation coefficient matrices and a set of cross-correlation coefficient vectors. Then, a linear equation group is constructed by using the autocorrelation coefficient matrix and the cross-correlation coefficient vector, so as to obtain an extrapolation filtering coefficient.

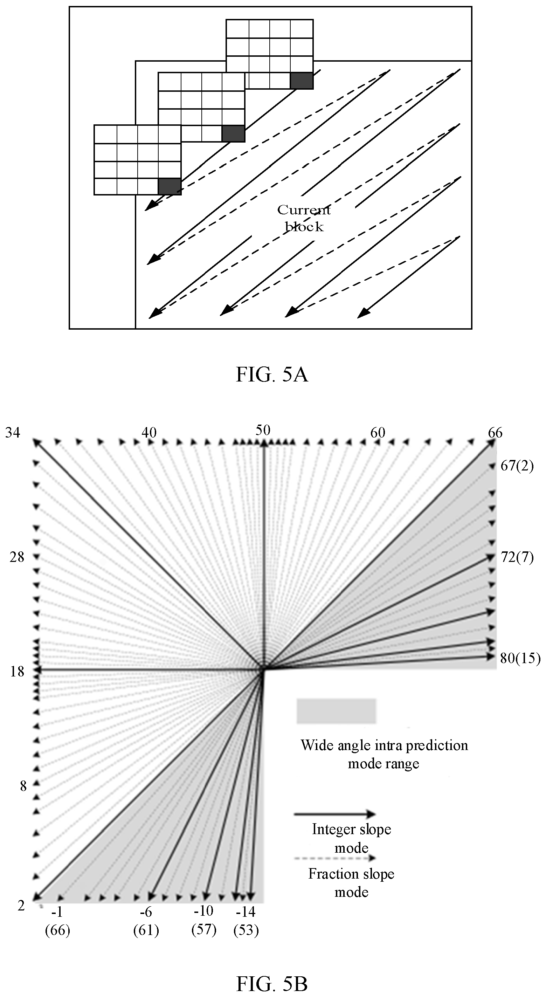

After the extrapolation filtering coefficient is obtained, a current block to be predicted may be predicted. For example, as shown in FIG. 5A, the extrapolation filter may be moved in a certain order from the upper-left corner to the lower-right corner of the current block. The extrapolation filter may be predicted according to a diagonal direction, and to-be-predicted points on a same diagonal line may be predicted in parallel.

Each time the extrapolation filter is moved to a position of a new sample, a predicted value of the sample may be calculated based on the following formula (1):

$$pred_r = \sum(t_{r+p_n} \times c_n) \quad (1)$$

In the foregoing formula, $pred_r$ represents a prediction result of a predicted location r in a current block, $t_{r+pn}$ indicates the input of the extrapolation filter, and $c_n$ indicates the extrapolation filtering coefficient. When $t_{r+pn}$ is located in the reconstruction area, the reconstructed sample value in the reconstruction area may be used as an input for extrapolation filtering. When $t_{r+pn}$ is located in the current block, the predicted value already obtained may be used as input.

After the prediction ends, the prediction value of the prediction block may be transformed, so as to obtain a transform coefficient. The transformation mentioned herein may include a primary transformation, or may include a secondary transformation. The primary transformation may be, for example, a multiple transform selection (multiple transform selection, MTS) or a non-separable primary transform (non-separable primary transform, NSPT). The secondary transformation may be, for example, a low frequency non-separable secondary transform (low frequency non-separable secondary transform, LFNST).

The MTS includes some conventional transformation manners, such as discrete cosine transform (discrete cosine transform, DCT) transformation, discrete sine transform (discrete sine transform, DST) transformation, and the like. NSPT and LFNST are a series of transform coefficients obtained by using a universal training set based on the optimal transform. A difference between the NSPT and the LFNST lies in that the NSPT may be directly used to transform residual information, and the LFNST further transforms a transform coefficient subjected to the DCT2 transform.

Different prediction modes may be suitable for different transformation manners. Therefore, an appropriate transform core may be selected according to the prediction mode of the prediction block. For a conventional prediction mode, for the NSPT or the LFNST, different traditional prediction modes may correspond to transform cores of different groups in a mapping manner (for example, lookup table) for transformation.

In the reference software ECM, conventional intra prediction modes include a planar mode, a DC mode, and an angular mode. An intra-prediction mode index of the planar mode is 0, an intra-prediction mode index of the DC mode is 1, and an intra-prediction mode index of the angular mode is 2~66.

Arrows in FIG. 5B point to directions corresponding to all angle prediction modes that exist in versatile video coding (versatile video coding, VVC). These angle prediction modes use a prediction mode index of 2~66 in encoding and decoding. If the current block is a non-square block, some angle directions are replaced with a wide angle (as identified by the indexes -1~-14 and 67~80 in FIG. 5B).

In the reference software of the ECM, the NSPT and the LFNST classify the traditional prediction modes into 35 groups, and each group has three optional transform cores. Table 1 shows a correspondence between a traditional prediction mode and a transform core group.

Table 1

| Tradition al intra mode | Planar mode | DC mode | Angle directio n: -14~-1 67~80, 2 and 66 | Angle directio n: 3 and 65 | Angle directio n: 4 and 64 | Angle directio n: 5 and 63 | Angle directio n: 6 and 62 | Angle directio n: 7 and 61 | Angle directio n: 8 and 60 |
|---|---|---|---|---|---|---|---|---|---|
| Group | 0 | 1 | 2 | 3 | 4 | 5 | 6 | 7 | 8 |
| 9 and 59 angle direction s | Angle directio n: 10 and 58 | Angle directio n: 11 and 57 | Angle directio n: 12 and 56 | Angle directio n: 13 and 55 | Angle directio n: 14 and 54 | Angle directio n: 15 and 53 | Angle directio n: 16 and 52 | Angle directio n: 17 and 51 | Angle directio n: 18 and 50 |
| 9 | 10 | 11 | 12 | 13 | 14 | 15 | 16 | 17 | 18 |
| 19 and 49 angle direction s | Angle directio n: 20 and 48 | Angle directio n: 21 and 47 | Angle directio n: 22 and 46 | Angle directio n: 23 and 45 | Angle directio n: 24 and 44 | Angle directio n: 25 and 43 | Angle directio n: 26 and 42 | Angle directio n: 27 and 41 | Angle directio n: 28 and 40 |
| 19 | 20 | 21 | 22 | 23 | 24 | 25 | 26 | 27 | 28 |
| 29 and 39 angle direction s | Angle directio n: 30 and 38 | Angle directio n: 31 and 37 | Angle directio n: 32 and 36 | Angle directio n: 33 and 35 | Angle directio n: 34 | | | | |
| 29 | 30 | 31 | 32 | 33 | 34 | | | | |

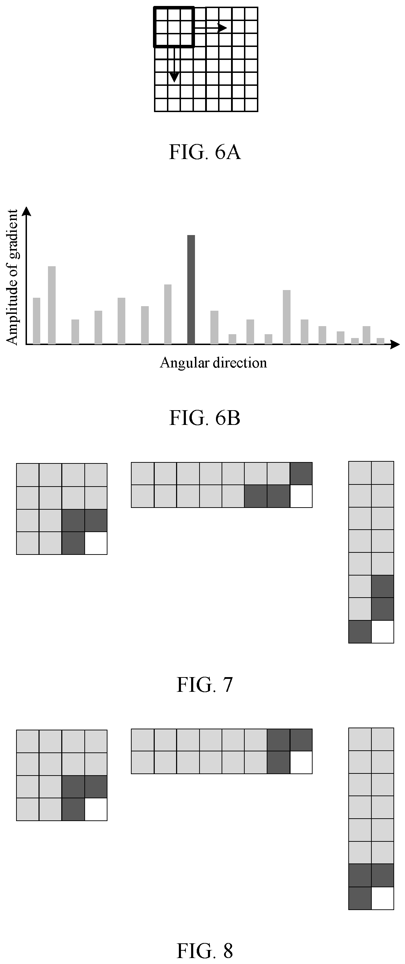

For a prediction block based on extrapolation filtering, the prediction block may be matched to a conventional prediction mode. Then, a transform core corresponding to the conventional prediction mode may be used as a transform core of the prediction block. For example, a prediction block based on extrapolation filtering may be matched to the planar mode or a prediction mode in the angular direction 2~66 according to a prediction value in the prediction block. With reference to FIG. 6A and FIG. 6B, an example of a manner of matching a prediction mode based on extrapolation filtering to a conventional prediction mode is described below.

As shown in FIG. 6A, a $3\times3$ sliding window may be slidden in a prediction block based on extrapolation filtering to calculate horizontal and vertical gradient values of each $3\times3$ window in the prediction block: $G_x$ and $G_y$. $G_x$ and $G_y$ may be obtained by multiplying the horizontal gradient operator $M_x$ and the vertical gradient operator $M_y$ of $3\times3$ by a predicted value point in the window position. The values of $M_x$ and $M_y$ are as follows:

$$M_x = \begin{bmatrix} -1 & 0 & 1 \\ -2 & 0 & 2 \\ -1 & 0 & 1 \end{bmatrix}, \ M_y = \begin{bmatrix} -1 & -2 & -1 \\ 0 & 0 & 0 \\ 1 & 2 & 1 \end{bmatrix}$$

Assuming that the prediction block based on extrapolation filtering is a block having a width and a height of (w, h), $G_x$ and $G_y$ of (w-2) * (h-2) positions in the center of the prediction block may be calculated by sliding the $3\times3$ window.

Then, the conventional angle direction $O$ corresponding to each position may be calculated according to $G_x$ and $G_y$ at each position by using the following formulas (2) and (3), and an amplitude value G of a gradient of an angle corresponding to each position is calculated.

$$G = |G_x| + |G_y| \quad (2)$$

$$O = \operatorname{atan}\left(\frac{G_y}{G_x}\right) \quad (3)$$

In some implementations, the calculation process of the atan may be simplified. For example, the calculation process of the atan may be simplified by looking up a table or by using formula deformation.

Then, the amplitude value G of the gradient at each position may be accumulated in a conventional angle category that is derived by the gradient at each position, to obtain a histogram of the amplitude value of the gradient (refer to FIG. 6B).

Finally, a conventional angle with a largest cumulative gradient amplitude value may be selected as an angle corresponding to a prediction block based on extrapolation filtering. When the amplitude values derived from all conventional angles are zero, the prediction block may be matched to a conventional planar mode. The traditional prediction mode matched by the extrapolation filter-based prediction block may be used for selection of transform core groups of NSPT and LFNST.

In some implementations, when extrapolation filtering is performed on a current block after a coefficient of the extrapolation filter is obtained, a set of adaptive maximum and minimum values may be used to limit an output range of the extrapolation filter.

For example, a set of maximum and minimum values may be found in a reconstructed area around the current block. Then, when the extrapolation filter is used to predict each position in the current block, the maximum value and the minimum value may be used to limit the output range of the output value of each position, as shown in formula (4). Compared with the prediction manner provided by the formula (1), the formula (4) additionally adds a limit operation of a maximum value and a minimum value.

$$pred_r = clip(min, max, \sum(t_{r+p_n} \times c_n)) \quad (4)$$

In which, max and min respectively indicate the maximum value and the minimum value mentioned above.

In some implementation manners, when the extrapolation filter coefficient is to be obtained, an average value may be subtracted from the input sample and the output sample of the extrapolation filter. In this way, the obtained extrapolation filter coefficient is beneficial to improve a fitting effect of the extrapolation filter. According to this implementation, when the extrapolation filter is used to predict the current block, the input data needs to be subtract the average value and then input to the extrapolation filter. The average value needs to be added to an output of the extrapolation filter to obtain the predicted value. Reference is made to formula (5). Compared with the prediction manner given by the formula (1), the formula (5) additionally adds an operation of subtracting the average value and adding the average value to the output.

$$pred_r = m + \sum((t_{r+p_n} - m) \times c_n) \quad (5)$$

In which, m is the foregoing average value mentioned above, may be a reconstruction value in a reconstructed area around a to-be-predicted current block, or may be an average value of some reconstruction values in a reconstructed area around the to-be-predicted current block.

In some implementations, direct mode (DM) or extracted mode is a highly efficient intra chroma prediction mode that is widely used. When the chroma block selects the DM mode, the chroma block acquires the mode selected by the luma block at the corresponding position for intra prediction.

Currently, an intra prediction technology based on extrapolation filtering is only used to perform intra prediction on the luma block. In a possible manner, an intra prediction mode based on extrapolation filtering is extended to a chroma block. However, when intra prediction is performed on the chroma block, extrapolation filtering coefficients also need to be obtained, resulting in high computational complexity. Therefore, in the conventional art, if an DM mode is selected for a chroma block, and an intra-prediction mode based on extrapolation filtering is selected for a luma block at a corresponding position, the DM mode is set to the planar prediction mode.

As described earlier, for a luma block using an intra prediction mode based on extrapolation filtering, a conventional prediction mode may be derived by constructing a gradient histogram. Therefore, in some implementation manners, if a DM mode is selected for the chroma block and an intra-prediction mode based on extrapolation filtering is selected for a luma block at the corresponding position, the conventional prediction mode may be used as a prediction mode of the chroma block.

The following describes a manner of selecting a basic transform core of a prediction block using an intra prediction mode based on extrapolation filtering.

After determining the predicted value of the current block, the encoder may calculate a difference between the predicted value and an original sample value of the current block, so as to obtain a residual value of the current block. The residual information may be further transformed, quantized, and encoded to write into a bitstream. At a decoding end, a coefficient obtained by the decoder by parsing from a bitstream is dequantized and inversely transformed to obtain a residual value, and the residual value is added to a predicted value to obtain a reconstructed value of a current block.

The foregoing describes a method for deriving a gradient histogram according to an extrapolation filter prediction result, matching the gradient histogram to a conventional prediction mode, and further selecting a non-separable transform core. In a related technology, in addition to the non-separable transform, a transform core selection manner is the same as a planar mode selection manner in another basic transform. However, the intra prediction mode based on extrapolation filtering is different from a characteristic of the planar mode. Therefore, a manner of selecting a basic transform core corresponding to the intra prediction mode based on extrapolation filtering should be optimized.

In the reference software ECM, the basic transform is divided into horizontal transform and vertical conversion transform. The allowed transform modes in each direction may include the following seven types: ('DCT2', 'DCT8', 'DST7', 'DCT5', 'DST4', 'DST1', 'IDTR'). In which, DCT2, DCT8, and DCT5 are several subclasses of a DCT; DST7, DST4, and DST1 are several subclasses of DST; and IDTR represents identity transform (identity transform), that is, no transform.

In the reference software ECM, the most common basic transform mode is DCT2 in both horizontal and vertical directions, which is denoted as DCT2-DCT2. The DCT2-DCT2 may be used as a transform before the LFNST, or may be used as a transform when the MTS technology is disabled. If the MTS mode is selected, the transformation process uses a combination of basic transformation in the horizontal direction and the vertical direction, rather than the non-separable transformation. In the reference software ECM, according to a characteristic of a non-zero coefficient in the parsed current block, the current block may have at most six non-DCT2-DCT2 transform cores for selection.

In some implementations, for a prediction block using an intra prediction mode based on extrapolation filtering, an MTS basic transform core used for a residual of the prediction block may be related to whether an extrapolation filtering mode is selected for a current block. For example, the MTS basic transform core may be related to an extrapolation filter sub-mode (i.e., a combination of extrapolation filter shape and reconstruction area) selected by the current block and/or a shape and a size of the current block.

The following provides two design solutions for a basic transform core that may be used by a prediction block based on an extrapolation filter mode.

In a design solution, the MTS optional basic transform core is related to whether the extrapolation filter prediction mode is selected for the current block. For example, if the extrapolation filter prediction mode is selected for the current block, a transform core may be selected from six MTS transform cores shown in Table 2:

Table 2

| MTS index | 0 | 1 | 2 | 3 | 4 | 5 |
|---|---|---|---|---|---|---|
| Transform core | DST7-DST7 | DST7-DST4 | DST4-DST7 | DST4-DST4 | DST1-DST7 | DST7-DST1 |

At the decoding end, when the MTS is selected and the prediction mode of the current block is the extrapolation filter prediction mode, a corresponding transform core may be selected from the six transform cores according to the parsed MTS transform index to perform inverse transform.

In another design solution, the MTS optional basic transform core is related to whether an extrapolation filter mode is selected for a current block and a shape and a size of the current block. If the extrapolation filter prediction mode is selected for the current block, an MTS transform core shown in Table 3 may be selected according to a shape and a size of the current block.

Table 3

| MTS index | 0 | 1 | 2 | 3 | 4 | 5 |
|---|---|---|---|---|---|---|
| 4 × 4 blocks | IDTR-IDTR | DST4-DST4 | IDTR-DST4 | DST4-IDTR | DST4-DCT8 | DCT8-DST4 |
| 4×8 block | IDTR-IDTR | DST4-DST4 | DST1-DST4 | DST7-DST4 | DCT8-DST4 | DST4-DCT5 |
| 4×16 block | DST7-DST4 | DST4-DST4 | DST1-DST4 | IDTR-IDTR | DCT5-DST4 | DST7-DCT5 |
| 4×32 block | DST4-DST4 | DST7-DST4 | DST4-DCT5 | DCT2-DCT5 | DST7-DCT5 | DCT2-IDTR |
| 8×4 block | IDTR-IDTR | DST4-DST4 | DST4-DST1 | DST4-DST7 | DST4-DCT8 | DCT5-DST4 |
| 8 × 8 | DST7-DST7 | DST4-DST4 | DST7-DCT2 | DCT2-DST7 | DST7-DST1 | DST1-DST7 |
| 8×16 block | DST7-DST7 | DST1-DST7 | DST7-DST4 | DST1-DST4 | DCT5-DST7 | DST4-DST7 |
| 8×32 block | DST7-DST7 | DST4-DST7 | DCT2-DST7 | DST1-DST7 | DST7-DST4 | DCT5-DST7 |
| 16×4 block | DST4-DST7 | DST4-DST4 | DST4-DST1 | IDTR-IDTR | DST4-DCT5 | DCT5-DST7 |
| 16×8 block | DST7-DST7 | DST7-DST1 | DST4-DST7 | DST4-DST1 | DST7-DCT5 | DST7-DST4 |
| 16 × 16 blocks | DST7-DST7 | DST7-DST1 | DST1-DST7 | DCT5-DST7 | DST7-DCT5 | DST7-DST4 |
| 16×32 block | DST7-DST7 | DST4-DST7 | DCT2-DST7 | DST1-DST7 | DST7-DCT5 | DCT5-DST7 |
| 32×4 block | DST4-DST4 | DST4-DST7 | DCT5-DST4 | DCT5-DCT2 | DCT5-DST7 | IDTR-DCT2 |

(continued)

| MTS index | 0 | 1 | 2 | 3 | 4 | 5 |
|---|---|---|---|---|---|---|
| 32×8 block | DST7-DST7 | DST7-DST4 | DST7-DCT2 | DST7-DST1 | DST4-DST7 | DST7-DCT5 |
| 32×16 block | DST7-DST7 | DST7-DST4 | DST7-DCT2 | DST7-DST1 | DCT5-DST7 | DST7-DCT5 |
| 32×32 block | DST7-DST7 | DST4-DST7 | DST7-DST4 | DCT5-DST7 | DST7-DCT5 | DCT2-DST7 |

At the decoding end, when the MTS is selected and the prediction mode of the current block is the extrapolation prediction mode, a corresponding transform core may be selected according to the parsed MTS transform index and the shape and size of the current block to perform inverse transform.

A candidate of the MTS transform core provided in the foregoing two design solutions may be obtained in the following manner. First, an encoder encodes a picture set or a video set by using an extrapolation filter prediction mode. Then, residual information of a block for which the extrapolation filter mode is selected is sorted (e.g., the shape and size of the block, the extrapolation filter mode) to select a transform core in a possible horizontal and vertical direction by category. The transform core selection criterion may be based on a sum of absolute difference (sum of absolute difference, SAD), a sum of squared error (sum of squared error, SSE), or another measurement criterion. For example, the transform coding gain (transform coding gain) of each transform core may be calculated. The transform coding gain may be defined as a transform coefficient variance of the arithmetic average divided by a transform coefficient variance of the geometric average.

In the extrapolation filter prediction mode described above, the extrapolation filter prediction does not contain a nonlinear term or a bias term. To improve the coding performance gain, a nonlinear term or a bias term may be introduced in the extrapolation filter prediction mode.

For example, referring to FIG. 7, on the basis of the 15-tap extrapolation filter shown in FIG. 1, a non-linear term of three taps may be added (refer to three dark gray blocks in FIG. 7 near the output position of the extrapolation filter). An input $t_i$ (a value of i is 0~14) of 15 linear terms of the extrapolation filter corresponds to 14 gray positions around a current to-be-predicted position, and $t_i$ is a reconstruction value or a prediction value in the gray position (depending on whether an input required by the current to-be-predicted position is located in a to-be-predicted block or a reconstruction area).

Input of three non-linear terms of the extrapolation filter is $p_i = (t_i \times t_i + midVal)>>bitDepth$, in which, i indicates three dark grey positions, $t_i$ indicates a value of the nonliner term, midVal and bitDepth are respectively equal to 512 and 10 in a case of 10 bits.

When a non-linear term is added, the following formula (6) may be used to predict the current to be predicted position:

$$Pred = \sum_{i0=0}^{a}(t_{i0} \times c_{i0}) + \sum_{i1=0}^{b}(p_{i1} \times c_{i1}) \ (6)$$

As mentioned above, the autocorrelation coefficient matrix and the cross-correlation coefficient vector are constructed in the process of obtaining extrapolation filtering coefficients. If a non-linear term is added to the prediction formula, a corresponding non-linear term value may also be added when constructing an autocorrelation coefficient matrix and a cross-correlation coefficient vector. Similarly, if a bias term is added to the prediction formula, the bias term may also be added when the autocorrelation coefficient matrix and the cross-correlation coefficient vector are constructed.

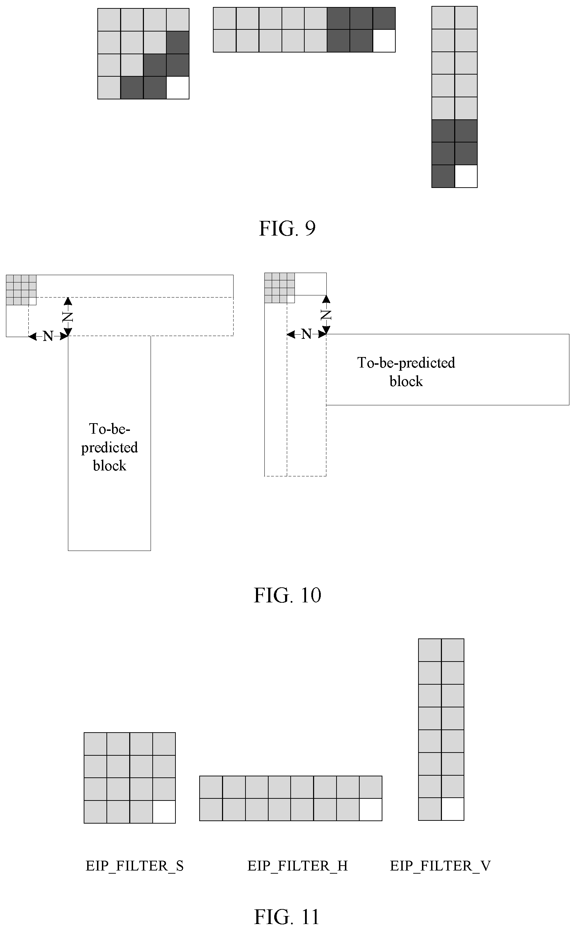

In addition to the example shown in FIG. 7, the nonlinear term shown in FIG. 8 may also be added to the extrapolation filter. Compared with FIG. 7, different extrapolation filters shown in FIG. 8 use non-linear terms of a similar shape, thereby simplifying the calculation. In addition to using three non-linear terms in the extrapolation filter, more non-linear terms may be used. For example, FIG. 9 shows an example in which five non-linear terms are used, that is, a non-linear term of five taps is added based on a linear term of an extrapolation filter of 15 taps. A quantity of nonlinear terms may be configured according to the performance and complexity requirements of encoding and decoding.

In some implementation manners, if the linear term uses the subtracting-average scheme mentioned in the foregoing, the non-linear term may also use the subtracting-average scheme mentioned in the foregoing.

The bias term refers to adding a filter coefficient of one tap to the extrapolation filter (as $c_{a+1}$ in formula (7)). In calculating the predicted value, the filtering coefficient may be multiplied by a constant. The constant may be correlated with the bit depth of the sample. For example, for a video sequence with a bit depth of 10, the constant may be 512 (i.e., $2^{10-1}$):

$$Pred = \sum_{i=0}^{a}(t_i \times c_i) + 512 \times c_{a+1} \ (7)$$

For example, for a narrow to-be-predicted block with a width of 16 and a height of 4, if an extrapolation filter coefficient is obtained by using a left reconstruction area, a quantity of to-be-predicted samples is relatively large, and a quantity of samples in a reconstruction area used to obtain an extrapolation filter parameter is relatively small. Similarly, for a narrow to-be-predicted block with a width of 4 and a height of 16, if an extrapolation filtering coefficient is obtained by using an upper reconstruction area, a quantity of to-be-predicted samples is relatively large, and a quantity of samples in an area used to obtain an extrapolation filtering parameter is relatively small. For details, one may refer to the two cases shown in FIG. 10.

Therefore, in some implementation manners, if the width of the to-be-predicted block $\times$ a < the height of the to-be-predicted block, the upper reconstruction area may be disabled to obtain an extrapolation filtering coefficient; and/or if the height of the to-be-predicted block $\times$ a < the width of the to-be-predicted block, the left reconstruction area may be disabled to obtain the extrapolation filtering coefficient. A value of a may be, for example, 2.

If some extrapolation filter submodes are limited according to the aspect ratio of the block to be predicted, a quantity of the extrapolation filter submodes allowed to be used at different aspect ratios is different. Therefore, when the extrapolation filter identifier is parsed, selection of its context model may be related to one or more of the factors such as the shape, or the aspect ratio of the block.

At a current stage, a coding complexity of the reference software ECM is increased by 6 to 8 times as compared with that of the VTM (reference software of the VVC). Therefore, the reference software ECM is difficult to be implemented due to an excessively high coding cost. An implementation manner of the extrapolation filtering technology is too complex, which causes a high coding cost. Specifically, the encoding end needs to acquire nine groups of extrapolation filtering coefficients from combinations of nine extrapolation filter shapes and reconstruction area types, and perform rate distortion filtering based on the nine groups of extrapolation filtering coefficients to determine whether to use the extrapolation filtering technology. A process of obtaining nine groups of extrapolation filtering coefficients is complex and consumes a relatively long time. According to a test, the extrapolation filtering technology may cause a time complexity of the encoding end to increase by more than 3% (approximately 3.7%).

Embodiments of this application provide an encoding method and a decoding method, which can reduce time complexity of an extrapolation filter prediction mode. The following describes the embodiments of this application in detail by using examples.

Each combination allowed by the to-be-predicted block mentioned in embodiments of this application may correspond to one type of reconstruction area (used to obtain an extrapolation filter coefficient) and one extrapolation filter shape. In other words, the combination allowed by the to-be-predicted block refers to a combination of the type of the reconstruction area and the shape of the extrapolation filter.

A specific quantity of extrapolation filter shapes is not limited in embodiments of this application, and may be selected according to an actual requirement. In some implementations, the extrapolation filter shape mentioned in embodiments of this application may include a first extrapolation filter shape, a second extrapolation filter shape, and a third extrapolation filter shape.

Three extrapolation filter shapes of 15 taps shown in FIG. 11 are used as an example. The first extrapolation filter shape may be any one of the three extrapolation filter shapes. For example, the first extrapolation filter shape may be, for example, an extrapolation filter shape EIP_FILTER_S, that is, a 4 × 4 extrapolation filter.

Three extrapolation filter shapes of 15 taps shown in FIG. 11 are used as an example. The second extrapolation filter shape may be any one of the three extrapolation filter shapes. For example, the second extrapolation filter shape may be, for example, an extrapolation filter shape EIP_FILTER_H, that is, an extrapolation filter of 2×8.

Three extrapolation filter shapes of 15 taps shown in FIG. 11 are used as an example. The third extrapolation filter shape may be any one of the three extrapolation filter shapes. For example, the first extrapolation filter shape may be, for example, an extrapolation filter shape EIP_FILTER_V, that is, an extrapolation filter of 8×2.

The reconstruction area mentioned in embodiments of this application refers to an area formed by reconstruction samples. The reconstruction area may be used to obtain an extrapolation filtering coefficient. A type of the reconstruction area is not specifically limited in embodiments of this application, and may be selected according to an actual requirement. In some implementation manners, the reconstruction area mentioned in embodiments of this application may include a first-type reconstruction area, a second-type reconstruction area, and a third-type reconstruction area.

Different types of reconstruction areas may include different areas around the to-be-predicted block.

In some implementations, the reconstruction area of the first type may include one or more of the following areas:

An upper side of the to-be-predicted block (which may include the upper left, upper, and upper right);
A reconstruction area on the left side of the to-be-predicted block (which may include the upper left, the left, and the lower left).

For example, the reconstruction area of the first type may include both the upper side of the to-be-predicted block and the reconstruction area on the left side of the to-be-predicted block.

In some implementations, the reconstruction area of the second type may include one or more of the following areas:

> An upper side of the to-be-predicted block (which may include the upper left, upper, and upper right);
> A reconstruction area on the left side of the to-be-predicted block (which may include the upper left, the left, and the lower left).

For example, the reconstruction area of the second type may be a reconstruction area on an upper side of the to-be-predicted block.

In some implementations, the third type of reconstruction area may include one or more of the following areas:

> An upper side of the to-be-predicted block (which may include the upper left, upper, and upper right);
> A reconstruction area on the left side of the to-be-predicted block (which may include the upper left, the left, and the lower left).

For example, the reconstruction area of the third type may be a reconstruction area on the left side of the to-be-predicted block.

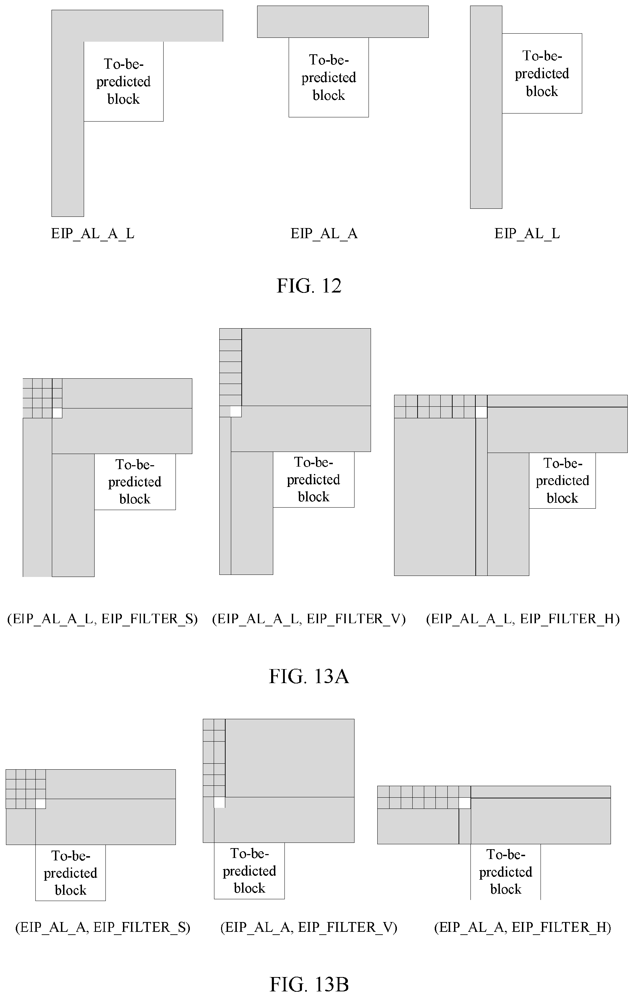

Figure 12 illustrates three types of reconstruction areas, that is, an L-shaped reconstruction area (hereinafter represented by EIP_AL_A_L), an upper reconstruction area (hereinafter represented by EIP_AL_A), and a left reconstruction area (hereinafter represented by EIP_AL_L).

The EIP_AL_A_L may include reconstruction areas located on the left, upper-left, lower-left, upper, and upper-right sides of the to-be-predicted block.

The EIP_AL_A may include reconstruction areas located on the upper left, upper, and upper right sides of the to-be-predicted block.

The EIP_AL_L may include reconstruction areas located on the upper left, left, and lower left sides of the to-be-predicted block.

The foregoing reconstruction area of the first type may be any one of the three types of reconstruction areas shown in FIG. 12. For example, the reconstruction area of the first type may be the EIP_AL_A_L.

The foregoing reconstruction area of the second type may be any one of the three types of reconstruction areas shown in FIG. 12. For example, the reconstruction area of the second type may be the EIP_AL_A.

The foregoing mentioned reconstruction area of the third type may be any one of the three types of reconstruction areas shown in FIG. 12. For example, the reconstruction area of the third type may be the EIP_AL_L.

Thes embodiments of this application set no specific limitation on a maximum quantity of "combinations of reconstruction area types and extrapolation filter shapes", which is related to a quantity of reconstruction area types allowed to be used and a quantity of extrapolation filter shapes.

In some implementations, the combination mentioned in embodiments of this application may include one or more of the following combinations:

> a first combination, corresponding to a reconstruction area of a first type and a shape of a first extrapolation filter;
> a second combination, corresponding to the reconstruction area of the first type and a shape of a second extrapolation filter;
> a third combination, corresponding to the reconstruction area of the first type and a shape of a third extrapolation filter;
> a fourth combination, corresponding to a reconstruction area of a second type and the shape of the first extrapolation filter;
> a fifth combination, corresponding to the reconstruction area of the second type and the shape of the second extrapolation filter;
> a sixth combination, corresponding to the reconstruction area of the second type and the shape of the third extrapolation filter;
> a seventh combination, corresponding to a reconstruction area of a third type and the shape of the first extrapolation filter;
> an eighth combination, corresponding to the reconstruction area of the third type and the shape of the second extrapolation filter; or
> a ninth combination, corresponding to the reconstruction area of the third type and the shape of the third extrapolation filter.

It is assumed that a reconstruction area type is EIP_AL_A_L shown in FIG. 12, and an extrapolation filter shape is EIP_FILTER_S, EIP_FILTER_H, and EIP_FILTER_V shown in FIG. 11, three combinations shown in FIG. 13A may be obtained, that is, (EIP_AL_A_L, EIP_FILTER_S), (EIP_AL_A_L, EIP_FILTER_V), and (EIP_AL_A_L, EIP_FILTER_H).

It is assumed that the reconstruction area type is EIP_AL_A shown in FIG. 12, and the extrapolation filter shape is EIP_FILTER_S, EIP_FILTER_H, and EIP_FILTER_V shown in FIG. 11, three combinations shown in FIG. 13B may be obtained, that is, (EIP_AL_A, EIP_FILTER_S), (EIP_AL_A, EIP_FILTER_V), and (EIP_AL_A, EIP_FILTER_H).

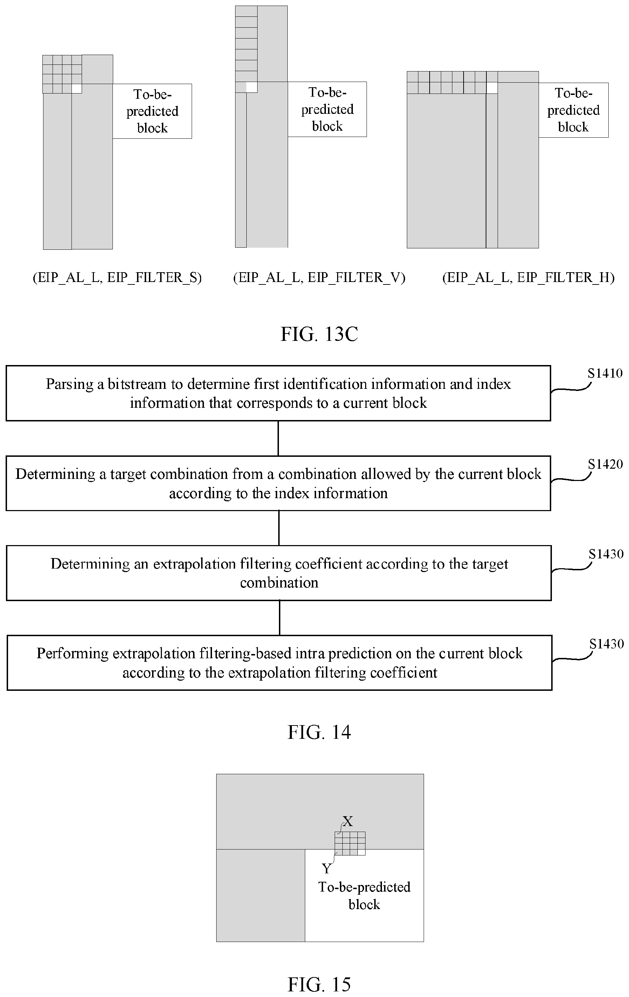

It is assumed that the reconstruction area type is EIP_AL_L shown in FIG. 12, and the extrapolation filter shape is EIP_FILTER_S, EIP_FILTER_H, and EIP_FILTER_V shown in FIG. 11, three combinations shown in FIG. 13C may be obtained, that is, (EIP_AL_L, EIP_FILTER_S), (EIP_AL_L, EIP_FILTER_V), and (EIP_AL_L, EIP_FILTER_H).

The foregoing first combination may be any combination in FIG. 13A to FIG. 13C. For example, the first combination may be (EIP_AL_A_L, EIP_FILTER_S).

The foregoing second combination may be any combination in FIG. 13A to FIG. 13C. For example, the second combination may be (EIP_AL_A_L, EIP_FILTER_H).

The foregoing third combination may be any combination in FIG. 13A to FIG. 13C. For example, the third combination may be (EIP_AL_A_L, EIP_FILTER_V).

The foregoing fourth combination may be any combination in FIG. 13A to FIG. 13C. For example, the fourth combination may be (EIP_AL_A, EIP_FILTER_S).

The foregoing fifth combination may be any combination in FIG. 13A to FIG. 13C. For example, the fifth combination may be (EIP_AL_A, EIP_FILTER_H).

The foregoing sixth combination may be any combination in FIG. 13A to FIG. 13C. For example, the sixth combination may be (EIP_AL_A, EIP_FILTER_V).

The foregoing seventh combination may be any combination in FIG. 13A to FIG. 13C. For example, the seventh combination may be (EIP_AL_L, EIP_FILTER_S).

The foregoing eighth combination may be any combination in FIG. 13A to FIG. 13C. For example, the eighth combination may be (EIP_AL_L, EIP_FILTER_H).

The foregoing ninth combination may be any combination in FIG. 13A to FIG. 13C. For example, the ninth combination may be (EIP_AL_L, EIP_FILTER_V).

It should be understood that, the foregoing merely uses an example to describe a shape of an extrapolation filter, a type of a reconstruction area, and a combination thereof. Embodiments of this application are not limited thereto. For example, four extrapolation filter shapes and three reconstruction areas may be set, so as to obtain 4×3=12 combinations. For another example, five extrapolation filter shapes and five reconstruction areas may be set, so as to obtain 5×5=25 combinations. In the following, a combination of an extrapolation filter shape, a reconstruction area type, an extrapolation filter shape, and a reconstruction area type shown in FIG. 11 to FIG. 13 is mainly used as an example for description.

For a to-be-predicted block of a specific shape and/or size, different combinations are selected with different probabilities in an intra prediction process. That is, for different shapes and/or sizes of to-be-predicted blocks, combinations that are more easily selected present a certain distribution feature.

It is assumed that a shape and/or a size of a to-be-predicted block is 4×4 to 32×32 (that is, 4×4, 4×8, 4×16, 4×32, 8×4, 8 × 8, 8×16, 8×32, 16×4, 16×8, 16×16, 16×32, 32×4, 32×8, 32×16, 32×32), and a combination of an extrapolation filter shape and a reconstruction area type is nine combinations shown in FIG. 13A to FIG. 13C. The following provides selected statistical data of the nine combinations for each shape and/or size (the statistical data is obtained by performing testing on a given video training set).

For statistical data of nine combinations shown in FIG. 13A to FIG. 13C being selected on a to-be-predicted block of 4×4, one may refer to Table 4 below.

Table 4

| Combination | Selected number of times/unit (times) |
| --- | --- |
| (EIP_AL_A_L, EIP_FILTER_S) | 20592.0 |
| (EIP_AL_A_L, EIP_FILTER_H) | 18016.0 |
| (EIP_AL_A_L, EIP_FILTER_V) | 17886.0 |
| (EIP_AL_A, EIP_FILTER_H) | 13603.0 |
| (EIP_AL_L, EIP_FILTER_V) | 13169.0 |
| (EIP_AL_A, EIP_FILTER_S) | 13162.0 |
| (EIP_AL_L, EIP_FILTER_S) | 12292.0 |
| (EIP_AL_A, EIP_FILTER_V) | 10365.0 |
| (EIP_AL_L, EIP_FILTER_H) | 9197.0 |

For statistical data of nine combinations shown in FIG. 13A to FIG. 13C being selected on a to-be-predicted block of 4×8, one may refer to Table 5 below.

Table 5

| Combination | Selected number of times/unit (times) |
|---|---|
| (EIP_AL_A_L, EIP_FILTER_S) | 29640.0 |
| (EIP_AL_A_L, EIP_FILTER_V) | 25449.0 |
| (EIP_AL_A_L, EIP_FILTER_H) | 24207.0 |
| (EIP_AL_L, EIP_FILTER_V) | 19258.0 |
| (EIP_AL_L, EIP_FILTER_S) | 19093.0 |
| (EIP_AL_A, EIP_FILTER_H) | 15787.0 |
| (EIP_AL_A, EIP_FILTER_S) | 14597.0 |
| (EIP_AL_L, EIP_FILTER_H) | 13389.0 |
| (EIP_AL_A, EIP_FILTER_V) | 11145.0 |

For statistical data of nine combinations shown in FIG. 13A to FIG. 13C being selected on a to-be-predicted block of 4×16, one may refer to Table 6 below.

Table 6

| Combination | Selected number of times/unit (times) |
|---|---|
| (EIP_AL_A_L, EIP_FILTER_S) | 20482.0 |
| (EIP_AL_A_L, EIP_FILTER_V) | 19001.0 |
| (EIP_AL_A_L, EIP_FILTER_H) | 16688.0 |
| (EIP_AL_L, EIP_FILTER_V) | 15222.0 |
| (EIP_AL_L, EIP_FILTER_S) | 14179.0 |
| (EIP_AL_L, EIP_FILTER_H) | 10138.0 |
| (EIP_AL_A, EIP_FILTER_H) | 8213.0 |
| (EIP_AL_A, EIP_FILTER_S) | 7264.0 |
| (EIP_AL_A, EIP_FILTER_V) | 6310.0 |

For statistical data of nine combinations shown in FIG. 13A to FIG. 13C being selected on a to-be-predicted block of 4×32, one may refer to Table 7 below.

Table 7

| Combination | Selected number of times/unit (times) |
|---|---|
| (EIP_AL_A_L, EIP_FILTER_V) | 8126.0 |
| (EIP_AL_A_L, EIP_FILTER_S) | 7704.0 |
| (EIP_AL_L, EIP_FILTER_V) | 6329.0 |
| (EIP_AL_A_L, EIP_FILTER_H) | 5732.0 |
| (EIP_AL_L, EIP_FILTER_S) | 5326.0 |
| (EIP_AL_L, EIP_FILTER_H) | 3538.0 |
| (EIP_AL_A, EIP_FILTER_V) | 2689.0 |
| (EIP_AL_A, EIP_FILTER_H) | 2559.0 |
| (EIP_AL_A, EIP_FILTER_S) | 2444.0 |

For statistical data of nine combinations shown in FIG. 13A to FIG. 13C being selected on a to-be-predicted block of 8×4, one may refer to the following Table 8.

Table 8

| Combination | Selected number of times/unit (times) |
|---|---|
| (EIP_AL_A_L, EIP_FILTER_S) | 29885.0 |
| (EIP_AL_A_L, EIP_FILTER_H) | 25573.0 |
| (EIP_AL_A_L, EIP_FILTER_V) | 25081.0 |
| (EIP_AL_A, EIP_FILTER_H) | 20530.0 |
| (EIP_AL_A, EIP_FILTER_S) | 19620.0 |
| (EIP_AL_A, EIP_FILTER_V) | 15094.0 |
| (EIP_AL_L, EIP_FILTER_V) | 15018.0 |
| (EIP_AL_L, EIP_FILTER_S) | 13511.0 |
| (EIP_AL_L, EIP_FILTER_H) | 10193.0 |

For statistical data of nine combinations shown in FIG. 13A to FIG. 13C being selected on a to-be-predicted block of 8 × 8, one may refer to Table 9 below.

Table 9

| Combination | Selected number of times/unit (times) |
|---|---|
| (EIP_AL_A_L, EIP_FILTER_S) | 62177.0 |
| (EIP_AL_A_L, EIP_FILTER_H) | 54020.0 |
| (EIP_AL_A_L, EIP_FILTER_V) | 48995.0 |
| (EIP_AL_L, EIP_FILTER_S) | 48879.0 |
| (EIP_AL_A, EIP_FILTER_S) | 48857.0 |
| (EIP_AL_A, EIP_FILTER_H) | 45562.0 |
| (EIP_AL_L, EIP_FILTER_V) | 40192.0 |
| (EIP_AL_L, EIP_FILTER_H) | 39083.0 |
| (EIP_AL_A, EIP_FILTER_V) | 36270.0 |

For statistical data of nine combinations shown in FIG. 13A to FIG. 13C being selected on a to-be-predicted block of 8×16, one may refer to Table 10 below.

Table 10

| Combination | Selected number of times/unit (times) |
|---|---|
| (EIP_AL_A_L, EIP_FILTER_S) | 47693.0 |
| (EIP_AL_A_L, EIP_FILTER_V) | 37882.0 |
| (EIP_AL_A_L, EIP_FILTER_H) | 36988.0 |
| (EIP_AL_L, EIP_FILTER_S) | 36937.0 |
| (EIP_AL_A, EIP_FILTER_S) | 33419.0 |
| (EIP_AL_L, EIP_FILTER_V) | 31671.0 |
| (EIP_AL_A, EIP_FILTER_H) | 28147.0 |
| (EIP_AL_L, EIP_FILTER_H) | 26892.0 |
| (EIP_AL_A, EIP_FILTER_V) | 25994.0 |

For statistical data of nine combinations shown in FIG. 13A to FIG. 13C being selected on a to-be-predicted block of 8×32, one may refer to Table 11 below.

Table 11

| Combination | Selected number of times/unit (times) |
| --- | --- |
| (EIP_AL_A_L, EIP_FILTER_S) | 12976.0 |
| (EIP_AL_A_L, EIP_FILTER_V) | 12242.0 |
| (EIP_AL_L, EIP_FILTER_V) | 10589.0 |
| (EIP_AL_L, EIP_FILTER_S) | 10390.0 |
| (EIP_AL_A_L, EIP_FILTER_H) | 10184.0 |
| (EIP_AL_A, EIP_FILTER_S) | 7969.0 |
| (EIP_AL_A, EIP_FILTER_V) | 7929.0 |
| (EIP_AL_L, EIP_FILTER_H) | 7244.0 |
| (EIP_AL_A, EIP_FILTER_H) | 6879.0 |

For statistical data of nine combinations shown in FIG. 13A to FIG. 13C being selected on a to-be-predicted block of 16×4, one may refer to Table 12 below.

Table 12

| Combination | Selected number of times/unit (times) |
| --- | --- |
| (EIP_AL_A_L, EIP_FILTER_H) | 20089.0 |
| (EIP_AL_A_L, EIP_FILTER_S) | 19330.0 |
| (EIP_AL_A, EIP_FILTER_H) | 16353.0 |
| (EIP_AL_A_L, EIP_FILTER_V) | 16282.0 |
| (EIP_AL_A, EIP_FILTER_S) | 14033.0 |
| (EIP_AL_A, EIP_FILTER_V) | 10693.0 |
| (EIP_AL_L, EIP_FILTER_V) | 7833.0 |
| (EIP_AL_L, EIP_FILTER_S) | 6507.0 |
| (EIP_AL_L, EIP_FILTER_H) | 6029.0 |

For statistical data of nine combinations shown in FIG. 13A to FIG. 13C being selected on a to-be-predicted block of 16×8, one may refer to Table 13 below.

Table 13

| Combination | Selected number of times/unit (times) |
| --- | --- |
| (EIP_AL_A_L, EIP_FILTER_S) | 45213.0 |
| (EIP_AL_A_L, EIP_FILTER_H) | 42984.0 |
| (EIP_AL_A, EIP_FILTER_H) | 37088.0 |
| (EIP_AL_A, EIP_FILTER_S) | 36402.0 |
| (EIP_AL_A_L, EIP_FILTER_V) | 34493.0 |
| (EIP_AL_L, EIP_FILTER_S) | 31602.0 |
| (EIP_AL_L, EIP_FILTER_H) | 29101.0 |
| (EIP_AL_L, EIP_FILTER_V) | 26341.0 |
| (EIP_AL_A, EIP_FILTER_V) | 26185.0 |

For statistical data of nine combinations shown in FIG. 13A to FIG. 13C being selected on a 16 × 16 to-be-predicted block, one may refer to Table 14 below.

Table 14

| Combination | Selected number of times/unit (times) |
|---|---|
| (EIP_AL_A_L, EIP_FILTER_S) | 42881.0 |
| (EIP_AL_A_L, EIP_FILTER_H) | 38819.0 |
| (EIP_AL_L, EIP_FILTER_S) | 36365.0 |
| (EIP_AL_A, EIP_FILTER_S) | 36189.0 |
| (EIP_AL_A_L, EIP_FILTER_V) | 35922.0 |
| (EIP_AL_A, EIP_FILTER_H) | 34339.0 |
| (EIP_AL_L, EIP_FILTER_H) | 32848.0 |
| (EIP_AL_L, EIP_FILTER_V) | 31103.0 |
| (EIP_AL_A, EIP_FILTER_V) | 30544.0 |

For statistical data of nine combinations shown in FIG. 13A to FIG. 13C being selected on a to-be-predicted block of 16×32, one may refer to Table 15 below.

Table 15

| Combination | Selected number of times/unit (times) |
|---|---|
| (EIP_AL_A_L, EIP_FILTER_S) | 16090.0 |
| (EIP_AL_A_L, EIP_FILTER_V) | 14648.0 |
| (EIP_AL_A_L, EIP_FILTER_H) | 14335.0 |
| (EIP_AL_L, EIP_FILTER_S) | 13988.0 |
| (EIP_AL_A, EIP_FILTER_S) | 12825.0 |
| (EIP_AL_L, EIP_FILTER_V) | 12642.0 |
| (EIP_AL_A, EIP_FILTER_V) | 11858.0 |
| (EIP_AL_A, EIP_FILTER_H) | 11490.0 |
| (EIP_AL_L, EIP_FILTER_H) | 11165.0 |

For statistical data of nine combinations shown in FIG. 13A to FIG. 13C being selected on a to-be-predicted block of 32×4, one may refer to Table 16 below.

Table 16

| Combination | Selected number of times/unit (times) |
|---|---|
| (EIP_AL_A_L, EIP_FILTER_H) | 10182.0 |
| (EIP_AL_A, EIP_FILTER_H) | 8064.0 |
| (EIP_AL_A_L, EIP_FILTER_S) | 7301.0 |
| (EIP_AL_A_L, EIP_FILTER_V) | 5907.0 |
| (EIP_AL_A, EIP_FILTER_S) | 5283.0 |
| (EIP_AL_A, EIP_FILTER_V) | 3619.0 |
| (EIP_AL_L, EIP_FILTER_H) | 2792.0 |
| (EIP_AL_L, EIP_FILTER_V) | 2260.0 |
| (EIP_AL_L, EIP_FILTER_S) | 2014.0 |

For statistical data of nine combinations shown in FIG. 13A to FIG. 13C being selected on a to-be-predicted block of 32×8, one may refer to Table 17 below.

Table 17

| Combination | Selected number of times/unit (times) |
| --- | --- |
| (EIP_AL_A_L, EIP_FILTER_H) | 14266.0 |
| (EIP_AL_A, EIP_FILTER_H) | 11984.0 |
| (EIP_AL_A_L, EIP_FILTER_S) | 10992.0 |
| (EIP_AL_A_L, EIP_FILTER_V) | 9715.0 |
| (EIP_AL_A, EIP_FILTER_S) | 9614.0 |
| (EIP_AL_L, EIP_FILTER_H) | 8537.0 |
| (EIP_AL_A, EIP_FILTER_V) | 7145.0 |
| (EIP_AL_L, EIP_FILTER_S) | 6394.0 |
| (EIP_AL_L, EIP_FILTER_V) | 6153.0 |

For statistical data of nine combinations shown in FIG. 13A to FIG. 13C being selected on a to-be-predicted block of 32×16, one may refer to Table 18 below.

Table 18

| Combination | Selected number of times/unit (times) |
| --- | --- |
| (EIP_AL_A_L, EIP_FILTER_H) | 16616.0 |
| (EIP_AL_A, EIP_FILTER_H) | 14970.0 |
| (EIP_AL_A_L, EIP_FILTER_S) | 14936.0 |
| (EIP_AL_A_L, EIP_FILTER_V) | 14800.0 |
| (EIP_AL_A, EIP_FILTER_S) | 12987.0 |
| (EIP_AL_A, EIP_FILTER_V) | 12608.0 |
| (EIP_AL_L, EIP_FILTER_H) | 12187.0 |
| (EIP_AL_L, EIP_FILTER_V) | 11533.0 |
| (EIP_AL_L, EIP_FILTER_S) | 10938.0 |

For statistical data of nine combinations shown in FIG. 13A to FIG. 13C being selected on a to-be-predicted block of 32×32, one may refer to Table 19 below.

Table 19

| Combination | Selected number of times/unit (times) |
| --- | --- |
| (EIP_AL_A_L, EIP_FILTER_S) | 16824.0 |
| (EIP_AL_A_L, EIP_FILTER_H) | 16733.0 |
| (EIP_AL_A_L, EIP_FILTER_V) | 15809.0 |
| (EIP_AL_L, EIP_FILTER_S) | 14993.0 |
| (EIP_AL_A, EIP_FILTER_H) | 14869.0 |
| (EIP_AL_A, EIP_FILTER_S) | 14612.0 |
| (EIP_AL_A, EIP_FILTER_V) | 14467.0 |
| (EIP_AL_L, EIP_FILTER_H) | 14165.0 |
| (EIP_AL_L, EIP_FILTER_V) | 13630.0 |

It should be understood that, the foregoing content is described by using an example in which a size of a to-be-predicted block is between 4×4 and 32×32. However, embodiments of this application are not limited thereto. For example, the to-be-predicted block may be a block having a size greater than 32×32. That is, an extrapolation filtering-based intra prediction technique may be used on a block with a size greater than 32×32. For example, the maximum size of the to-be-predicted block may be a size corresponding to a specified allowed maximum encoding unit, prediction unit, or transform unit.

It can be learned from the statistical data that the probabilities of different combinations being selected under different blocks are not exactly the same. According to the statistical results, it can be found that the combination (EIP_AL_A_L, EIP_FILTER_S) among the nine combinations has a relatively high selection probability on all blocks with different sizes/shapes. In addition, if the to-be-predicted block is a narrow rectangular to-be-predicted block, a reconstruction sample area adjacent to a relatively long side is more easily to be selected. In addition, for a narrow rectangular to-be-predicted block, a shape of the extrapolation filter is also related to a selected probability. For example, on a block of 4×32, EIP_FILTER_H is more easily to be selected, and on a block of 32×4, EIP_FILTER_V is more easily to be selected.

According to the foregoing statistical characteristic, combinations that are allowed by to-be-predicted blocks of different shapes and/or sizes are optimized in embodiments of this application. Specifically, in embodiments of this application, a combination allowed by the to-be-predicted block corresponds (or associated) to a shape and/or a size of the to-be-predicted block. For a to-be-predicted block of a specific shape and/or size, to save encoding time, a combination allowed by the to-be-predicted block may be limited, thereby optimizing coding and decoding performance overall.

The following describes in detail a correspondence between a shape and/or a size of a to-be-predicted block and a combination allowed by the to-be-predicted block. It should be understood that a correspondence between a shape and/or a size of a to-be-predicted block and a combination allowed by the to-be-predicted block may be applied to an encoding end, or may be applied to a decoding end. The correspondence may be, for example, a mapping relationship table. The correspondence may be determined by negotiation between the encoding end and the decoding end, or may be indicated by using protocol predefined information.

In some implementations, if a size of a to-be-predicted current block is greater than or equal to a first size, a quantity of combinations allowed by the current block is a first quantity; or if the size of the current block is less than the first size, the quantity of combinations allowed by the current block is less than the first quantity. That is, in this implementation, a large-sized to-be-predicted block allows a relatively large quantity of combinations, and a small-sized to-be-predicted block allows a relatively small quantity of combinations. This is because using the extrapolation filtering-based intra-prediction technique on small blocks takes more encoding time than large blocks. Therefore, removing more combinations on small blocks can save more encoding and decoding time. In addition, using more combinations on large blocks can guarantee encoding and decoding performance.

In some implementations, the first size is greater than or equal to 16×16. For example, if the size of the current block is 16×16, 32×32, 16×32, or 32×16, the quantity of combinations allowed by the current block is the first quantity. This is because, relative to a large block (a block with a size greater than 16×16), using the extrapolation filtering-based intra prediction technology on the small block occupies more encoding time. Therefore, removing more combinations on the small block can save more encoding and decoding time. In addition, using more combinations on large blocks can guarantee encoding and decoding performance.

In some implementations, the first number is the maximum quantity of combinations allowed by the block to be predicted. It should be understood that the maximum quantity of combinations allowed by the to-be-predicted block is related to the shape of the extrapolation filter and the type of the reconstruction area that can be used. If the extrapolation filter corresponds to three extrapolation filter shapes and three reconstruction areas, a maximum value of a quantity of combinations allowed by the to-be-predicted block may be 3×3=9.

For example, if the size of the current block is greater than or equal to the first size, the current block is allowed to use the following nine combinations:

a first combination, corresponding to a reconstruction area of a first type and a shape of a first extrapolation filter;
a second combination, corresponding to the reconstruction area of the first type and a shape of a second extrapolation filter;
a third combination, corresponding to the reconstruction area of the first type and a shape of a third extrapolation filter;
a fourth combination, corresponding to a reconstruction area of a second type and the shape of the first extrapolation filter;
a fifth combination, corresponding to the reconstruction area of the second type and the shape of the second extrapolation filter;
a sixth combination, corresponding to the reconstruction area of the second type and the shape of the third extrapolation filter;
a seventh combination, corresponding to a reconstruction area of a third type and the shape of the first extrapolation filter;

an eighth combination, corresponding to the reconstruction area of the third type and the shape of the second extrapolation filter; or

a ninth combination, corresponding to the reconstruction area of the third type and the shape of the third extrapolation filter.

It is assumed that an extrapolation filter shape includes EIP_FILTER_S, EIP_FILTER_V, and EIP_FILTER_H. A type of a reconstruction area includes EIP_AL_A_L, EIP_AL_A, and EIP_AL_L. In this case, the first combination may be (EIP_AL_A_L, EIP_FILTER_S), the second combination may be (EIP_AL_A_L, EIP_FILTER_H), the third combination may be (EIP_AL_A_L, EIP_FILTER_V), the fourth combination may be (EIP_AL_A, EIP_FILTER_S), the fifth combination may be (EIP_AL_A, EIP_FILTER_H), the sixth combination may be (EIP_AL_A, EIP_FILTER_V), the seventh combination may be (EIP_AL_L, EIP_FILTER_S), the eighth combination may be (EIP_AL_L, EIP_FILTER_H), and the ninth combination may be (EIP_AL_L, EIP_FILTER_V).

For example, a size of a current block is 16×16, 32×32, 16×32, or 32×16, an extrapolation filter shape includes EIP_FILTER_S, EIP_FILTER_V, and EIP_FILTER_H, and a type of a reconstruction area includes EIP_AL_A_L, EIP_AL_A, and EIP_AL_L, a combination allowed by the current block may be determined based on the following Table 20:

Table 20

| Shape of the block to be predicted | Combined index 0 | Combined index 1 | Combined index 2 | Combined index 3 | Combined index 4 | Combined index 5 | Combined index 6 | Combined index 7 | Combined index 8 |
|---|---|---|---|---|---|---|---|---|---|
| 16 × 16 | (EIP_AL_A_L, EIP_FI LTER_ S) | (EIP_AL_A_L, EIP_F ILTER _V) | (EIP_A L_A_L, EIP_FIL TER_H) | (EIP_A L_L, EIP_FIL TER_S) | (EIP_A L_A, EIP_FIL TER_S) | (EIP_A L_A, EIP_FIL TER_H) | (EIP_A L_L, EIP_FIL TER_V) | (EIP_A L_L, EIP_FIL TER_H) | (EIP_A L_A, EIP_FIL TER_V) |
| 32×32 | (EIP_AL_A_L, EIP_FI LTER_ S) | (EIP_AL_A_L, EIP_F ILTER _V) | (EIP_A L_A_L, EIP_FIL TER_H) | (EIP_A L_L, EIP_FIL TER_S) | (EIP_A L_A, EIP_FIL TER_S) | (EIP_A L_A, EIP_FIL TER_H) | (EIP_A L_L, EIP_FIL TER_V) | (EIP_A L_L, EIP_FIL TER_H) | (EIP_A L_A, EIP_FIL TER_V) |
| 16×32 | (EIP_AL_A_L, EIP_FI LTER_ S) | (EIP_AL_A_L, EIP_F ILTER _V) | (EIP_A L_A_L, EIP_FIL TER_H) | (EIP_A L_L, EIP_FIL TER_S) | (EIP_A L_A, EIP_FIL TER_S) | (EIP_A L_A, EIP_FIL TER_H) | (EIP_A L_L, EIP_FIL TER_V) | (EIP_A L_L, EIP_FIL TER_H) | (EIP_A L_A, EIP_FIL TER_V) |
| 32×16 | (EIP_AL_A_L, EIP_FI LTER_ S) | (EIP_AL_A_L, EIP_F ILTER _H) | (EIP_A L_A_L, EIP_FIL TER_V) | (EIP_A L_A, EIP_FIL TER_S) | (EIP_A L_L, EIP_FIL TER_S) | (EIP_A L_L, EIP_FIL TER_V) | (EIP_A L_A, EIP_FIL TER_H) | (EIP_A L_A, EIP_FIL TER_V) | (EIP_A L_L, EIP_FIL TER_H) |

In some implementations, if the current block is a block of 4×N and/or N×4, the quantity of combinations allowed by the current block is less than or equal to a second quantity. The second quantity may be less than the maximum value of the quantity of combinations allowed by the to-be-predicted block. The maximum value of the quantity of combinations allowed by the to-be-predicted block is related to the shape of the extrapolation filter and/or the type of reconstruction area allowed. For example, three extrapolation filter shapes and three reconstruction areas are allowed to be used, and a maximum value of a quantity of combinations allowed by the to-be-predicted block may be 3×3=9. Blocks of 4×N and/or N×4 belong to smaller blocks. Compared with large blocks, using extrapolation filtering-based intra prediction techniques on small blocks occupies more encoding time. Therefore, limiting the quantity of combinations used by small blocks can save more encoding and decoding time.

In some implementations, the second quantity may be 3. That is, if the current block is a block of 4×N and/or N×4, the number of combinations allowed by the current block is less than or equal to 3.

In some implementations, N may be a positive integer less than or equal to 32. For example, a value of N may be 4, 8, 16, or 32.

In some implementations, if the current block is a block of 4×4, 4×8, 4×16, 8×4, or 16×4, a combination allowed by the current block includes one or more of the following combinations:

a first combination, corresponding to a reconstruction area of a first type and a shape of a first extrapolation filter;
a second combination, corresponding to the reconstruction area of the first type and a shape of a second extrapolation filter; or
a third combination, corresponding to the reconstruction area of the first type and a shape of a third extrapolation filter.

It is assumed that an extrapolation filter shape includes EIP_FILTER_S, EIP_FILTER_V, and EIP_FILTER_H, and a type of a reconstruction area includes EIP_AL_A_L, EIP_AL_A, and EIP_AL_L. In this case, the first combination may be (EIP_AL_A_L, EIP_FILTER_S), the second combination may be (EIP_AL_A_L, EIP_FILTER_H), and the third combination may be (EIP_AL_A_L, EIP_FILTER_V). Therefore, for a current block of 4×4, 4×8, 4×16, 8×4, or 16×4, a combination allowed by the current block may be determined based on the following Table 21.

Table 21

| Shape/size of the block to be predicted | Combination index 0 | Combination index 1 | Combination index 2 |
|---|---|---|---|
| 4 × 4 | (EIP_AL_A_L, EIP_FILTER_S) | (EIP_AL_A_L, EIP_FILTER_V) | (EIP_AL_A_L, EIP_FILTER_H) |
| 4×8 | (EIP_AL_A_L, EIP_FILTER_S) | (EIP_AL_A_L, EIP_FILTER_V) | (EIP_AL_A_L, EIP_FILTER_H) |
| 4×16 | (EIP_AL_A_L, EIP_FILTER_S) | (EIP_AL_A_L, EIP_FILTER_V) | (EIP_AL_A_L, EIP_FILTER_H) |
| 8×4 | (EIP_AL_A_L, EIP_FILTER_S) | (EIP_AL_A_L, EIP_FILTER_H) | (EIP_AL_A_L, EIP_FILTER_V) |
| 16×4 | (EIP_AL_A_L, EIP_FILTER_S) | (EIP_AL_A_L, EIP_FILTER_H) | (EIP_AL_A_L, EIP_FILTER_V) |

In some implementations, if the current block is a block of 4×32 or 32×4, the quantity of combinations allowed by the current block is less than or equal to a third quantity. The third quantity may be less than the second quantity mentioned above. For example, if the second quantity is 3, the second quantity may be 2. A block of 4×32 or 32×4 is a narrow rectangular block, and a narrow rectangular block is more likely to select a specific type of reconstruction area and/or a specific extrapolation filter shape. For example, a reconstruction sample area adjacent to a longer side of a narrow rectangular block is more easily to be selected. For another example, for a block of 4×32, EIP_FILTER_H is more easily to be selected. For another example, for a block of 32×4, EIP_FILTER_V is more easily to be selected. Therefore, for narrow rectangular blocks, more combination limitations may be introduced based on the foregoing information, thereby saving encoding time while maintaining encoding and decoding performance.

In some implementations, if the current block is a block of 4×32, a combination allowed by the current block includes one or more of the following combinations:

a first combination, corresponding to a reconstruction area of a first type and a shape of a first extrapolation filter; or

a third combination, corresponding to the reconstruction area of the first type and a shape of a third extrapolation filter.

It is assumed that an extrapolation filter shape includes EIP_FILTER_S, EIP_FILTER_V, and EIP_FILTER_H, and a type of a reconstruction area includes EIP_AL_A_L, EIP_AL_A, and EIP_AL_L. In this case, the first combination may be (EIP_AL_A_L, EIP_FILTER_S), and the third combination may be (EIP_AL_A_L, EIP_FILTER_V). Thus, for a current block of 4×32, the allowed combinations may be determined based on Table 22 below.

Table 22

| Shape/size of the block to be predicted | Combination index 0 | Combination index 1 |
|---|---|---|
| 4×32 | (EIP_AL_A_L, EIP_FILTER_S) | (EIP_AL_A_L, EIP_FILTER_V) |

In some implementations, if the current block is a block of 32×4, a combination allowed by the current block includes one or more of the following combinations:

a first combination, corresponding to a reconstruction area of a first type and a shape of a first extrapolation filter; or

a second combination, corresponding to the reconstruction area of the first type and a shape of a second extrapolation filter.

An extrapolation filter shape includes EIP_FILTER_S, EIP_FILTER_V, and EIP_FILTER_H, and a type of a reconstruction area includes EIP_AL_A_L, EIP_AL_A, and EIP_AL_L. In this case, the first combination may be (EIP_AL_A_L, EIP_FILTER_S), and the second combination may be (EIP_AL_A_L, EIP_FILTER_H). Therefore, for a current block of 32×4, the allowed combinations may be determined based on Table 23 below.

Table 23

| Shape/size of the block to be predicted | Combination index 0 | Combination index 1 |
|---|---|---|
| 32×4 | (EIP_AL_A_L, EIP_FILTER_S) | (EIP_AL_A_L, EIP_FILTER_H) |

According to testing, if the combinations allowed by the to-be-predicted block are limited to the combinations included in Table 20 to Table 23, the coding and decoding performance remains substantially unchanged. However, an increase in encoding time due to the introduction of extrapolation filtering techniques is reduced from 3.7% to approximately 2.6%.

As mentioned earlier, for blocks of 4×16 or 16×4, a quantity of the allowed combination is a second quantity (e.g., 3). To further save encoding time, the quantity of combinations allowed by blocks of 4×16 or 16×4 may be further limited. For example, the quantity of combinations allowed by blocks of 4×16 or 16×4 may be limited to a third quantity (less than a second quantity). The third quantity may be, for example, 2.

In some implementations, if the current block is a block of 8×N and/or N×8, the quantity of combinations allowed by the current block is less than or equal to the fourth quantity. N is a positive integer, and 8≤N≤32. For example, N may be 8, 16, or 32.

The fourth quantity is less than a maximum value of a quantity of combinations allowed by the to-be-predicted block. The maximum value of the quantity of combinations allowed by the block to be predicted is related to the extrapolation filter shape and/or the type of the reconstruction area allowed. For example, three extrapolation filter shapes and three reconstruction areas are allowed to be used, and a maximum value of a quantity of combinations allowed by the to-be-predicted block may be 3×3=9. A value of the fourth quantity may be, for example, 5.

In some implementations, the fourth quantity may be greater than the second quantity mentioned above. The second quantity mentioned above is for blocks of 4×N and/or N×4, and blocks of 8×N and/or N×8 (8≤N≤32) have a larger size than such blocks. That is, in this implementation, a large-sized to-be-predicted block allows a relatively large quantity of combinations, and a small-sized to-be-predicted block allows a relatively small quantity of combinations. This is because using extrapolation filtering-based intra-prediction techniques on small blocks takes more encoding time than large blocks. Therefore, removing more combinations on small blocks can save more encoding and decoding time.

In some implementations, if the current block is a block of 8×8, a combination allowed by the current block includes one or more of the following combinations:

a first combination, corresponding to a reconstruction area of a first type and a shape of a first extrapolation filter;

a second combination, corresponding to the reconstruction area of the first type and a shape of a second extrapolation filter;

a third combination, corresponding to the reconstruction area of the first type and a shape of a third extrapolation filter;

a fourth combination, corresponding to a reconstruction area of a second type and the shape of the first extrapolation filter; or

a seventh combination, corresponding to a reconstruction area of a third type and the shape of the first extrapolation filter.

It is assumed that an extrapolation filter shape includes EIP_FILTER_S, EIP_FILTER_V, and EIP_FILTER_H, and a reconstruction area type includes EIP_AL_A_L, EIP_AL_A, and EIP_AL_L. In this case, the first combination may be (EIP_AL_A_L, EIP_FILTER_S), the second combination may be (EIP_AL_A_L, EIP_FILTER_H), the third combination may be (EIP_AL_A_L, EIP_FILTER_V), the fourth combination may be (EIP_AL_A, EIP_FILTER_S), and the seventh combination may be (EIP_AL_L, EIP_FILTER_S). Therefore, for a current block of 8×8, the allowed combination may be determined based on the following Table 24.

Table 24

| Shape/size of the block to be predicted | Combination index 0 | Combination index 1 | Combination index 2 | Combination index 3 | Combination index 4 |
|---|---|---|---|---|---|
| 8×8 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_A, EIP_FILTER_S) |

In some implementations, if the current block is a block of 8×16 or 8×32, a combination allowed by the current block includes one or more of the following combinations:

a first combination, corresponding to a reconstruction area of a first type and a shape of a first extrapolation filter;
a second combination, corresponding to the reconstruction area of the first type and a shape of a second extrapolation filter;
a third combination, corresponding to the reconstruction area of the first type and a shape of a third extrapolation filter;
a seventh combination, corresponding to a reconstruction area of a third type and the shape of the first extrapolation filter; or
a ninth combination, corresponding to the reconstruction area of the third type and the shape of the third extrapolation filter.

It is assumed that an extrapolation filter shape includes EIP_FILTER_S, EIP_FILTER_V, and EIP_FILTER_H, and a reconstruction area type includes EIP_AL_A_L, EIP_AL_A, and EIP_AL_L. In this case, the first combination may be (EIP_AL_A_L, EIP_FILTER_S), the second combination may be (EIP_AL_A_L, EIP_FILTER_H), the third combination may be (EIP_AL_A_L, EIP_FILTER_V), the seventh combination may be (EIP_AL_L, EIP_FILTER_S), and the ninth combination may be (EIP_AL_L, EIP_FILTER_V). Thus, for a current block of 8×16 or 8×32, the allowed combinations may be determined based on Table 25 below.

Table 25

| Shape/size of the block to be predicted | Combination index 0 | Combination index 1 | Combination index 2 | Combination index 3 | Combination index 4 |
|---|---|---|---|---|---|
| 8×16 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_S) | (EIP_AL_L, EIP_FILTER_V) |
| 8×32 | (EIP_AL_A_L, EIP_FILTER_S) | (EIP_AL_A_L, EIP_FILTER_V) | (EIP_AL_A_L, EIP_FILTER_H) | (EIP_AL_L, EIP_FILTER_V | (EIP_AL_L, EIP_FILTER_S) |

In some implementations, if the current block is a 16×8 or 32×8 block, a combination allowed by the current block includes one or more of the following combinations:

a first combination, corresponding to a reconstruction area of a first type and a shape of a first extrapolation filter;

a second combination, corresponding to the reconstruction area of the first type and a shape of a second extrapolation filter; and

a third combination, corresponding to the reconstruction area of the first type and a shape of the third extrapolation filter;

a fifth combination, corresponding to a reconstruction area of a second type and the shape of the second extrapolation filter; or

a seventh combination, corresponding to a reconstruction area of a third type and the shape of the first extrapolation filter.

It is assumed that an extrapolation filter shape includes EIP_FILTER_S, EIP_FILTER_V, and EIP_FILTER_H, and a type of a reconstruction area includes EIP_AL_A_L, EIP_AL_A, and EIP_AL_L. In this case, the first combination may be (EIP_AL_A_L, EIP_FILTER_S), the second combination may be (EIP_AL_A_L, EIP_FILTER_H), the third combination may be (EIP_AL_A_L, EIP_FILTER_V), the fifth combination may be (EIP_AL_A, EIP_FILTER_H), and the seventh combination may be (EIP_AL_L, EIP_FILTER_S). Thus, for a current block of 16×8 or 32×8, the allowed combinations may be determined based on Table 26 below.

Table 26

| Shape/size of the block to be predicted | Combination index 0 | Combination index 1 | Combination index 2 | Combination index 3 | Combination index 4 |
|---|---|---|---|---|---|
| 16×8 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_S) | (EIP_AL_A, EIP_FILTER_H) |
| 32×8 | (EIP_AL_A_L, EIP_FILTER_S) | (EIP_AL_A_L, EIP_FILTER_H) | (EIP_AL_A_L, EIP_FILTER_V) | (EIP_AL_A, EIP_FILTER_H) | (EIP_AL_A, EIP_FILTER_S) |

As mentioned earlier, the quantity of combinations allowed by blocks of 8×32 or 32×8 may be a fourth quantity (e.g., 5). To further save encoding time, the quantity of combinations allowed blocks of 8×32 or 32×8 may be further limited. For example, the quantity of combinations allowed by blocks of 8×32 or 32×84 may be limited to a fifth quantity (less than a fourth quantity). The fifth quantity may be, for example, 3.

In some implementation manners, to reduce coding time complexity, the first target prediction block may be prevented from using an intra-prediction mode based on extrapolation filtering. The first target prediction block may include, for example, one or more of the following: a block of 4×4, a block of 4×N (N is a positive integer less than or equal to 32, for example, N is equal to 4, 8, 16, or 32), a block with a width greater than twice a height, and a block with a height greater than twice a width. Certainly, blocks of another size and/or shape may be prohibited from using an extrapolation filtering technology according to an actual requirement, thereby further reducing time complexity of encoding.

In some implementations, for any to-be-predicted block that allows the use of extrapolation filtering techniques, the allowed combination of the to-be-predicted blocks includes a first combination. The first combination corresponds to a reconstruction area of the first type and a first filter shape. It is assumed that an extrapolation filter shape includes EIP_FILTER_S, EIP_FILTER_V, and EIP_FILTER_H, and a reconstruction area type includes EIP_AL_A_L, EIP_AL_A, and EIP_AL_L. In this case, the first combination may be (EIP_AL_A_L, EIP_FILTER_S). It can be learned from the foregoing statistical data of the blocks of all sizes that (EIP_AL_A_L, EIP_FILTER_S) is selected by all the to-be-predicted blocks with a relatively high probability. Therefore, combinations of all the to-be-predicted blocks each includes the first combination, thereby being beneficial to maintain encoding and decoding performance.

The foregoing describes in detail the concept of combinations allowed by prediction blocks and limitations of the combination that may be introduced for blocks of various shapes/sizes. The foregoing content may be applied to an encoding end, or may be applied to a decoding end.

The following describes in detail the decoding method provided in embodiments of this application.

FIG. 14 is a schematic flowchart of a decoding method according to an embodiment of this application. The method in FIG. 14 may also be referred to as an intra prediction method or an intra prediction method based on extrapolation filtering. The method of FIG. 14 may be applied to a decoder.

Referring to FIG. 11, in step S1410, a bitstream is parsed to determine first identification information and index information that corresponds to a current block.

The current block may refer to a to-be-predicted current block or a to-be-decoded current block. In some implementations, the current block is a luma block. In other implementations, the current block may also be a chroma block.

The first identification information may be used to indicate that the prediction mode of the current block is an intra prediction mode based on extrapolation filtering. For ease of description, the following uses cu_eip_flag to represent the first identification information (certainly, the first identification information may also be represented by using any other letter and/or number). cu_eip_flag may be represented by a context adaptive arithmetic entropy coding syntax element (i.e. ae (v)).

In some implementations, a value of cu_eip_flag may be true or false.

In some implementations, the cu_eip_flag may be encoded or decoded using a context model.

In some implementations, the cu_eip_flag may be encoded or decoded in a bypass coding manner.

In some implementations, if cu_eip_flag does not exist in the bitstream, a value of cu_eip_flag may be a default value (for example, 0).

The index information may be used to indicate or determine a target combination used by a current block in intra-prediction based on extrapolation filtering. The target combination may be one of the combinations allowed by the current block (for a description of the combinations allowed by the current block, one may refer to the foregoing description of the combinations used by the operation of the to-be-predicted block).

In some implementations, the index information may include an index value, and based on the index value, a target combination may be directly determined from a combination allowed by a current block. For example, a combination allowed by a current block includes four combinations, and the index value may include two fixed-length binary codes. The two fixed-length binary codes have four values, which are respectively in a one-to-one correspondence with the four combinations allowed by the current block.

As mentioned above, a combination (hereinafter referred to as the first combination) may be selected by a to-be-predicted block of various shapes/sizes with a relatively high probability. It is assumed that an extrapolation filter shape includes EIP_FILTER_S, EIP_FILTER_V, and EIP_FILTER_H, and a reconstruction area type includes EIP_AL_A_L, EIP_AL_A, and EIP_AL_L. In this case, a probability of selecting (EIP_AL_A_L, EIP_FILTER_S) by a to-be-predicted block of various shapes/sizes is relatively high. Therefore, in some implementation manners, this feature may be used to optimize the foregoing indication manner of the index information, thereby reducing a quantity of encoded bits corresponding to the index information. For example, the index information may include second identification information. The second identification information may be a binary code (binary code). For ease of description, the following uses first_mode to represent the second identification information (certainly, the second identification information may also be represented by using any other letter and/or number). The first_mode may be used to indicate whether the target combination is a first combination (e.g., (EIP_AL_A_L, EIP_FILTER_S)). If the first_mode indicates that the target combination is the first combination, the index information may not carry the third identification information (for detailed description, refer to the following) mentioned later, so as to reduce a quantity of encoded bits corresponding to the index information.

In some implementations, the first_mode may be encoded or decoded using a context model.

In some implementations, the first_mode may be encoded or decoded in a bypass coding manner.

In some implementations, if the first_mode indicates that the target combination is not the first combination and/or the quantity of combinations allowed by the current block is greater than 2, the index information may further include third identification information. The third identification information may be used to indicate a target combination from combinations except the first combination in the combinations allowed by the current block. For ease of description, the following uses other_mode to represent the third identification information (certainly, the third identification information may also be represented by using any other letter and/or number).

In some implementations, the other_mode may be encoded or decoded using a context model.

In some implementations, the other_mode may be encoded or decoded in a bypass coding manner.

In some implementations, the other_mode may be represented by a fixed-length code of different lengths according to a quantity of the combination allowed by a current block.

As an example, it is assumed that a current block is a block of $4\times32$ or $32\times4$, and a quantity of combinations allowed by the current block may be 2. Because only two combinations are allowed to be used by the current block, in this case, the index information may include only first_mode. If the first_mode indicates that the target combination is not the first combination, it indicates that the target combination is another combination except the first combination in the two combinations. As an example, for a block of $4\times32$ or $32\times4$, a correspondence between index information and a combination allowed by the current block may be determined based on Table 27.

Table 27

|  | Combination index 0 | Combination index 1 |
| --- | --- | --- |
| First_mode Binary identifier value | Binary identifier: 1 | Binary identifier: 0 |

For another example, assuming that the current block is a block of $4\times N$ or $N\times4$ other than $4\times32$ or $32\times4$, and the

quantity of combinations allowed by the current block is 3, the current block allows two combinations in addition to the first combination. In this case, the other_mode may indicate the two combinations by using a fixed-length binary code. As an example, for a block of 4×32 or 32×4, a correspondence between index information and a combination allowed by the current block may be determined based on Table 28.

Table 28

|  | Combination index 0 | Combination index 1 | Combination index 2 |
|---|---|---|---|
| first_mode | Binary identifier: 1 | Binary identifier: 0 | Binary identifier: 0 |
| other_mode | None | Binary identifier: 0 | Binary identifier: 1 |

For another example, assuming that the current block is a block of 8×N or N×8, and the quantity of combinations allowed by the current block is 5, the current block allows four combinations in addition to the first combination. In this case, the other_mode may indicate the four combinations by using two fixed-length binary codes. As an example, for a block of 8×N or N×8, a correspondence between index information and a combination allowed by the current block may be determined based on Table 29 below.

Table 29

|  | Combination index 0 | Combination index 1 | Combination index 2 | Combination index 3 | Combination index 4 |
|---|---|---|---|---|---|
| first_mode | Binary identifier: 1 | Binary identifier: 0 | Binary identifier: 0 | Binary identifier: 0 | Binary identifier: 0 |
| other_mode | None | Binary identifier: 00 | Binary identifier: 01 | Binary identifier: 10 | Binary identifier: 11 |

For another example, it is assumed that the current block is a block of 16×16, 16×32, 32×16, or 32×32, and a quantity of combinations allowed by the current block is 9. Therefore, in addition to the first combination, the current block further allows eight combinations. In this case, the other_mode may indicate the eight combinations by using three fixed-length binary codes. As an example, for a block of 16×16, 16×32, 32×16, or 32×32, a correspondence between index information and a combination allowed by the current block may be determined based on the following Table 30.

Table 30

| | Combination index 0 | Combination index 1 | Combination index 2 | Combination index 3 | Combination index 4 | Combination index 5 | Combination index 6 | Combination index 7 | Combination index 8 |
|---|---|---|---|---|---|---|---|---|---|
| first_mode | Binary identifier: 1 | Binary identifier: 0 | Binary identifier: 0 | Binary identifier: 0 | Binary identifier: 0 | Binary identifier: 0 | Binary identifier: 0 | Binary identifier: 0 | Binary identifier: 0 |
| other_mode | None | Binary identifier: 000 | Binary identifier: 001 | Binary identifier: 010 | Binary identifier: 011 | Binary identifier: 100 | Binary identifier: 101 | Binary identifier: 110 | Binary identifier: 111 |

For another example, it is assumed that a current block is a block of $4\times16$, $16\times4$, and a quantity of combinations allowed by the current block is 2. Because only two combinations are allowed by the current block, in this case, the index information may include only first_mode. If the first_mode indicates that the target combination is not the first combination, it indicates that the target combination is another combination except the first combination in the two combinations. As an example, for a block of $4\times32$ or $32\times4$, a correspondence between index information and a combination allowed by the current block may be determined based on the following Table 31.

Table 31

|  | Combination index 0 | Combination index 1 |
| --- | --- | --- |
| first_mode Binary identifier value | Binary identifier: 1 | Binary identifier: 0 |

For another example, assuming that the current block is a block of $8\times32$ or $32\times8$, and the quantity of combinations allowed by the current block is 3, the current block allows two combinations in addition to the first combination. In this case, the other_mode may indicate the two combinations by using a fixed-length binary code. As an example, for a block of $4\times32$ or $32\times4$, a correspondence between index information and a combination allowed by the current block may be determined based on the following Table 32.

Table 32

|  | Combination index 0 | Combination index 1 | Combination index 2 |
| --- | --- | --- | --- |
| first_mode | Binary identifier: 1 | Binary identifier: 0 | Binary identifier: 0 |
| other_mode | None | Binary identifier: 0 | Binary identifier: 1 |

In some implementations, if the first_mode does not exist in the bitstream, a value of the first_mode may be a default value (for example, 0).

In some implementations, if other_mode does not exist in the bitstream, a value of other_mode may be a default value (for example, 0).

In some implementations, the other_mode may be decoded in a manner such as a truncated unary code, a truncated binary code, or Columbus coding. For example, if the quantity of combinations that need to be indicated by the other_mode is not a power of 2, the foregoing coding manner may be used for decoding.

In step S1420, the target combination is determined from the combinations allowed by the current block according to the index information.

In some implementations, a combination allowed by the current block may be determined according to the shape and/or size of the current block. Then, the target combination may be determined from the combinations allowed by the current block according to the index information.

In some implementations, first, it may be determined, according to the first_mode in the index information, whether the target combination is the first combination in the combinations allowed by the current block. If the target combination is the first combination in the combinations allowed by the current block, step S1430 may be performed according to the first combination.

In some implementations, it may be determined, according to the first_mode in the index information, whether the target combination is the first combination in the combinations allowed by the current block. If the target combination is not the first combination in the combinations allowed by the current block, a quantity of combinations except the first combination in the combinations allowed by the current block may be determined. For ease of description, in the following, numOtherModes is used to represent a quantity of remaining combinations. If numOtherModes is equal to 1 (that is, in addition to the first combination, a combination allowed by the current block includes only one combination), parsing of the other_mode may be skipped, and the remaining combination is directly determined as the foregoing target combination. A current block is a block of $4\times32$ or $32\times4$ for example. As mentioned above, a quantity of combinations allowed by the block of $4\times32$ or $32\times4$ may be 2. Therefore, for such a current block, if the target combination is not the first combination, parsing of the other_mode may be skipped, and the remaining combination is directly determined as the foregoing target combination.

Further, in some implementations, if numOtherModes is greater than 1, the other_mode may be parsed from the bitstream, and the target combination is determined according to the other_mode. Using a block ($8\leq N\leq32$) whose current block is $8\times N$ or $N\times8$, as mentioned above, the number of combinations allowed by the block of $8\times N$ or $N\times8$ may be 5. Therefore, for such a current block, if the target combination is not the first combination, two binary codes may be further parsed to determine the target combination.

The following describes a more specific example of a manner of determining a target combination with reference to codes.

The encoding unit syntax (coding unit syntax) is as follows:

| Coding_unit (x 0, y0, cbWidth, cbHeight, cqtDepth, treeType, modeType) ( | Descriptor |
|---|---|
| ......//Decode grammatical elements associated with other modes prior to an intra prediction mode based on extrapolation filtering | |
| If (spsEipAllowed)//Decode an extrapolation filter identifier when a higher-level syntax element, such as an SPS identifier, allows an extrapolation filter mode to be used | |
| cu_eip_flag[x0][y0] | ae(v) |
| If (cu_eip_flag) ( | |
| first_mode[x0][y0] | ae(v) |
| If (!First_mode [x0][y0]) ( | |
| If (numOtherModes > 1) | |
| Other_mode [x0][y0] | ae(v) |
| ) | |
| ) | |
| else ...//Decode a subsequent prediction mode based on the extrapolation filtering intra-prediction mode | |
| ) | |

In some implementations, a combination index identifier of the target combination may be first determined according to first_mode and other_mode in the index information. Then, the target combination is determined based on a correspondence between the combination index identifier of the target combination and the combination.

A current block is a block of $4\times32$ or $32\times4$ for example, and the combination index identifier of the target combination may be first determined according to the index information and the correspondence between the index information and the combination index identifier shown in table 27. Then, the target combination may be determined according to the combination index identifier of the target combination and a correspondence between the combination index identifier and the combination shown in table 22 or table 23.

The current block is a block of another $4\times N$ or $N\times4$ except $4\times32$ or $32\times4$, the combination index identifier of the target combination may be first determined according to the index information and the correspondence between the index information and the combination index identifier shown in table 28. Then, the target combination may be determined according to the combination index identifier of the target combination and the correspondence between the combination index identifier and the combination shown in table 21.

In step S1430, the extrapolation filtering coefficient is determined according to the target combination.

In some implementation manners, the extrapolation filter corresponding to the target combination may be slidden in the reconstruction area corresponding to the target combination, so as to construct a set of autocorrelation coefficient matrices and a set of cross-correlation coefficient vectors. Then, an extrapolation filter coefficient may be further obtained by constructing a linear equation group of equations by using an autocorrelation coefficient matrix and a cross-correlation coefficient vector.

In step S1440, intra prediction based on extrapolation filtering is performed on the current block according to the extrapolation filtering coefficient.

In some implementations, prediction may be performed in the current block in a sequence from top left to bottom right by using an extrapolation filter in a diagonal direction of the current block.

In some implementations, the extrapolation filter may determine a predicted value of each to-be-predicted location in the current block based on the following formula (8):

$$pred_r = clip(min, max, \sum_{n=0}^{a}(t_{r+p_n} \times c_n)) \ (8)$$

In which, $pred_r$ represents a prediction result of a prediction block location r, $t_{r+pn}$ represents an input of an extrapolation filter, a represents a quantity of input positions of the extrapolation filter, $p_n$ represents a position difference between an n-th input position in the a input positions and a current output position, a specific position of $p_n$ is related to a shape of the extrapolation filter, and $c_n$ is an extrapolation filter coefficient corresponding to the n-th input position. A value of a is equal to a quantity of taps of the extrapolation filter. For example, a value of a may be 15.

When $r + p_n$ is located in the reconstruction area, the reconstruction value in the reconstruction area is used as an input $t_{r+pn}$ of the extrapolation filter, as shown by position X in FIG. 15. When $r + p_n$ is located in the current block, the predicted sample value in the current block is used as input $t_{r+pn}$, as shown by position Y in FIG. 15.

In which, min and max are intended to limit the maximum and minimum values of the predicted position of the current block (certainly, in some embodiments, the maximum and minimum values of the predicted value may not be limited).

In some implementations, a value of min may be, for example, 0.

In some implementations, a value of max may be, for example, a maximum predicted value allowed at a bit depth of a current video sequence. For example, if the current video sequence bit depth is 10 bits, a value of max may be 1023.

In some implementations, if the current block is a chrominance block, the current block is selected to perform prediction by using the DM mode, and an intra prediction mode of the luma block of the current block is an intra prediction mode based on extrapolation filtering, a gradient histogram may be derived according to a prediction value of the luma block at a corresponding position, and then a conventional intra prediction mode (for example, an angular prediction mode) is obtained according to the gradient histogram, and the chroma block is predicted by using the conventional prediction mode. For a detailed description, one may refer to the foregoing related description of FIG. 6.

In some implementation manners, the method in FIG. 14 may further include: parsing a bitstream to determine a quantized coefficient of a current block; performing dequantization on the quantized coefficient to determine a transform coefficient of the current block; and performing inverse transform on the transform coefficient to determine residual information of the current block. There may be multiple inverse transform manners. For example, the current block is a luma block, and a gradient histogram may be derived according to a luminance prediction value of the luma block. Then, a conventional intra prediction mode (such as an angular prediction mode) may be obtained according to the gradient histogram, and a group of secondary transform cores is selected by using the angle mode. Then, a corresponding transform core may be found in the secondary transform core corresponding to the group according to a decoded secondary transform index to perform inverse transform. For another example, the current block is a luma block, and a gradient histogram may be derived according to the luminance prediction value of the luma block. Then, a conventional intra prediction mode (such as an angular prediction mode) may be obtained according to the gradient histogram, and a group of primary transform cores is selected by using the angle mode. Then, the corresponding transform core may be determined according to the decoded primary transform index to perform inverse transform.

In some implementation manners, the method in FIG. 14 may further include: determining reconstruction information of the current block according to a prediction value and residual information of the current block. For example, a sum of predicted values and residual values of the current block may be calculated, and the sum may be used as a reconstruction value of the current block.

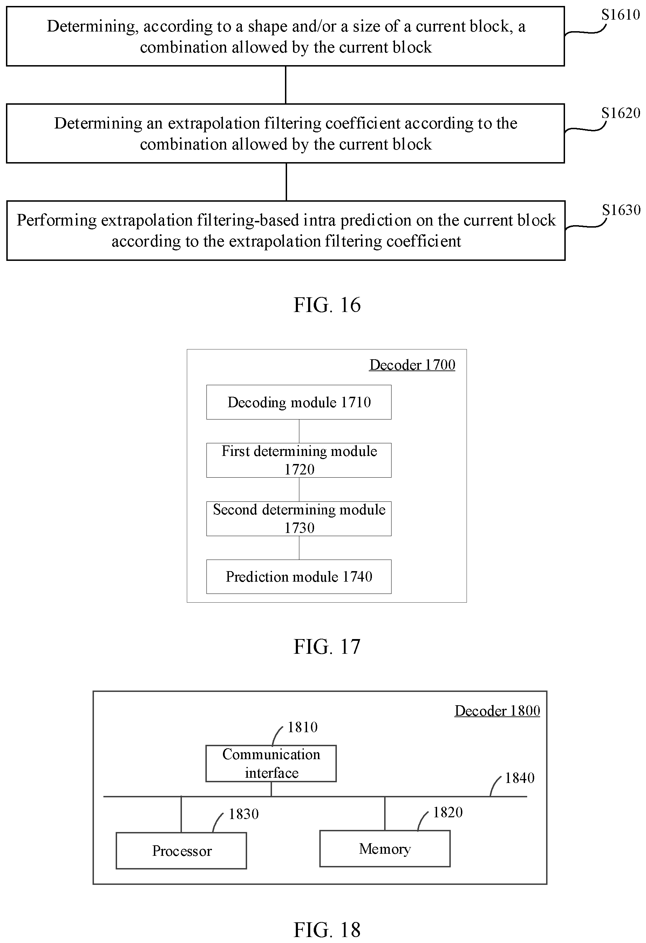

With reference to FIG. 14, the foregoing describes in detail the decoding method provided embodiments of this application. With reference to FIG. 16, the following describes in detail an encoding method provided in embodiments of this application.

FIG. 16 is a schematic flowchart of an encoding method according to an embodiment of this application. The method in FIG. 16 may also be referred to as an intra prediction method, or an intra prediction method based on extrapolation filtering. The method of FIG. 16 may be applied to an encoder.

Referring to FIG. 16, in step S1610, a combination allowed by a current block is determined according to a shape and/or a size of the current block.

The current block may refer to a to-be-predicted current block or a to-be-decoded current block. In some implementations, the current block is a luma block. In other implementations, the current block may be a chroma block. For a shape and/or a size of the current block and a combination allowed by the current block, one may refer to the foregoing description. Details are not described herein again.

In step S1620, the extrapolation filtering coefficient is determined according to the combination allowed by the current block.

For example, if a quantity of combinations allowed by the current block is M (M is a positive integer greater than or equal to 1), step S1620 may include: determining M groups of extrapolation filtering coefficients according to the M combinations allowed by the current block.

As a more specific example, for each combination allowed by the current block, an extrapolation filter corresponding to the combination may be slidden within a reconstruction area corresponding to the combination to construct a set of autocorrelation coefficient matrices and a set of cross-correlation coefficient vectors. Then, an extrapolation filter coefficient may be further obtained by constructing a linear equation group by using the autocorrelation coefficient matrices and the cross-correlation coefficient vectors.

In step S1630, intra prediction based on extrapolation filtering is performed on the current block according to the extrapolation filtering coefficient.

Assuming that a quantity of combinations allowed by the current block is M, M groups of extrapolation filtering coefficients may be obtained by performing step S1620. In step S1630, extrapolation filtering-based intra prediction may be performed on the current block for M times based on each of the M groups of extrapolation filtering coefficients. For example, for each of the M groups of extrapolation filtering coefficients, prediction may be performed in the current block by using the extrapolation filter in a sequence from the top left to the bottom right in a diagonal direction of the current block.

In some implementations, the extrapolation filter may determine a predicted value of each to-be-predicted location in the current block based on the following formula (9):

$$pred_r = clip(min, max, \sum_{n=0}^{a}(t_{r+p_n} \times c_n)) \ (9)$$

In which, $pred_r$ represents a prediction result of a prediction block location r, $t_{r+pn}$ represents an input of an extrapolation filter, a represents a quantity of input positions of the extrapolation filter, $p_n$ represents a position difference between an n-th input position in the a input positions and a current output position, a specific position of $p_n$ is related to a shape of the extrapolation filter, and $c_n$ is an extrapolation filter coefficient corresponding to the n-th input position. A value of a is equal to a quantity of taps of the extrapolation filter. For example, a value of a may be 15.

When $r + p_n$ is located in the reconstruction area, the reconstruction value in the reconstruction area is used as an input $t_{r+pn}$ of the extrapolation filter, as shown by position X in FIG. 15. When $r + p_n$ is located in the current block, the predicted pixel value in the current block is used as input $t_{r+pn}$, as shown by position Y in FIG. 15.

In which, min and max are intended to limit the maximum and minimum values of the predicted position of the current block (certainly, in some embodiments, the maximum and minimum values of the predicted value may be not limited).

In some implementations, a value of min may be, for example, 0.

In some implementations, a value of max may be, for example, a maximum predicted value allowed at a bit depth of a current video sequence. For example, if the current video sequence bit depth is 10 bits, a value of max may be 1023.

In some implementations, if the current block is a chroma block, prediction is performed on the current block by using the DM mode, and an intra prediction mode of the luma block corresponding to the current block is an intra prediction mode based on extrapolation filtering, a gradient histogram may be derived according to a prediction value of the luma block at a corresponding position, then a conventional intra prediction mode (for example, an angular prediction mode) is obtained according to the gradient histogram, and the chroma block is predicted by using the conventional prediction mode. For a detailed description, one may refer to the foregoing related description of FIG. 6.

In some implementation manners, the method in FIG. 16 may further include: determining residual information of a current block according to a predicted value of the current block. For example, a difference between an original sample value of the current block and the predicted value of the current block may be determined as residual information of the current block.

In some implementation manners, if the prediction value of the current block is determined based on a target combination in the combination allowed by the current block, the first identification information is encoded, and an encoded bit of the first identification information is written into the bitstream. The first identification information is used to indicate that the prediction mode of the current block is an intra prediction mode based on extrapolation filtering. For ease of description, the following uses cu_eip_flag to represent the first identification information (certainly, the first identification information may also be represented by using any other letter and/or number). cu_eip_flag may be a context adaptive arithmetic entropy coding syntax element (i.e., ae (v)).

In some implementations, a value of cu_eip_flag may be true or false.

In some implementations, the cu_eip_flag may be encoded or decoded using a context model.

In some implementations, the cu_eip_flag may be encoded or decoded in a bypass encoding manner.

In some implementations, if cu_eip_flag does not exist in the bitstream, a value of cu_eip_flag may be a default value (for example, 0).

In some implementations, if the predicted value of the current block is determined based on the target combination in the combination allowed by the current block, the index information is encoded, and the encoded bit of the index information is written into the bitstream. The index information is used to indicate the target combination.

The index information may be used to indicate or determine a target combination used by a current block in intra-prediction based on extrapolation filtering. The target combination may be one of the combinations allowed by the current block (for a description of the combinations allowed by the current block, refer to the foregoing description).

In some implementations, the index information may include an index value, and based on the index value, a target combination may be directly determined from the combination allowed by the current block. For example, the combination allowed by the current block includes four combinations, and the index value may include two fixed-length binary codes. The two fixed-length binary codes have four values, which are respectively in a one-to-one correspondence with the four combinations allowed by the current block.

As mentioned above, a combination (hereinafter referred to as the first combination) may be selected by a to-be-predicted block of various shapes/sizes with a relatively high probability. An extrapolation filter shape includes EIP_FILTER_S, EIP_FILTER_V, and EIP_FILTER_H, and a reconstruction area type includes EIP_AL_A_L, EIP_AL_A, and EIP_AL_L. In this case, a probability of selecting (EIP_AL_A_L, EIP_FILTER_S) by a to-be-predicted block of various shapes/sizes is relatively high. Therefore, in some implementations, this feature may be used to optimize the foregoing index information, thereby reducing a quantity of encoded bits corresponding to the index information. For example, the index information may include second identification information. The second identification information may be a binary code (binary code). For ease of description, the following uses first_mode to represent the second identification information (certainly, the second identification information may also be represented by using any other letter and/or number). The first_mode may be used to indicate whether the target combination is a first combination (e.g., (EIP_AL_A_L, EIP_FILTER_S)). If first_mode indicates that the target combination is the first combination, the index information may not carry the third identification information mentioned later (for detailed description, refer to the following), thereby reducing a quantity of encoded bits corresponding to the index information.

In some implementations, the first_mode may be encoded or decoded using a context model.

In some implementations, the first_mode may be encoded or decoded in a bypass encoding manner.

In some implementations, if the first_mode indicates that the target combination is not the first combination and/or the quantity of combinations allowed by the current block is greater than 2, the index information may further include third identification information. The third identification information may be used to indicate a target combination from combinations except the first combination in the combinations allowed by the current block. For ease of description, the following uses other_mode to represent the third identification information (certainly, the third identification information may also be represented by using any other letter and/or number).

In some implementations, the other_mode may be encoded or decoded using a context model.

In some implementations, the other_mode may be encoded or decoded in a bypass encoding manner.

In some implementations, the other_mode may be represented by a fixed-length code of different lengths according to a quantity of combinations allowed by the current block.

As an example, it is assumed that a current block is a block of $4\times32$ or $32\times4$, and a quantity of combinations allowed by the current block is 2. Because only two combinations are allowed by the current block, in this case, the index information may include only first_mode. If the first_mode indicates that the target combination is not the first combination, it indicates that the target combination is another combination except the first combination in the two combinations. As an example, for a block of $4\times32$ or $32\times4$, a correspondence between index information and a combination allowed by the current block may be determined based on table 27 described above.

For another example, it is assumed that the current block is a block of $4\times N$ or $N\times4$ other than $4\times32$ or $32\times4$, and the quantity of combinations allowed by the current block is 3, the current block allows two combinations in addition to the first combination. In this case, the other_mode may indicate the two combinations by using a fixed-length binary code. As an example, for a block of $4\times32$ or $32\times4$, a correspondence between index information and the combination allowed by the current block may be determined based on table 28 described above.

For another example, it is assumed that the current block is a block of $8\times N$ or $N\times8$, and the quantity of combinations allowed by the current block is 5, the current block allows four combinations in addition to the first combination. In this case, the other_mode may indicate the four combinations by using two fixed-length binary codes. As an example, for a block of $8\times N$ or $N\times8$, a correspondence between index information and the combination allowed by the current block may be determined based on table 29 described above.

For another example, it is assumed that the current block is a block of $16\times16$, $16\times32$, $32\times16$, or $32\times32$, and the quantity of combinations allowed by the current block is 9. Therefore, in addition to the first combination, the current block further allows eight combinations. In this case, the other_mode may indicate the eight combinations by using three fixed-length binary codes. As an example, for a block of $16\times16$, $16\times32$, $32\times16$, or $32\times32$, a correspondence between index information and the combination allowed by the current block may be determined based on table 30 described above.

For another example, it is assumed that a current block is a block of $4\times16$, $16\times4$, and the quantity of combinations allowed by the current block is 2. Because only two combinations are allowed by the current block, in this case, the index information may include only first_mode. If the first_mode indicates that the target combination is not the first combination, it indicates that the target combination is another combination except the first combination in the two combinations. As an example, for a block of $4\times32$ or $32\times4$, a correspondence between index information and the combination allowed by the current block may be determined based on table 31 described above.

For another example, it is assumed that the current block is a block of $8\times32$ or $32\times8$, and the quantity of combinations allowed by the current block is 3, the current block allows two combinations in addition to the first combination. In this case, the other_mode may indicate the two combinations by using a fixed-length binary code. As an example, for a block of $4\times32$ or $32\times4$, a correspondence between index information and the combination allowed by the current block may be determined based on table 32 described above.

In some implementations, the other_mode may be encoded in a manner such as a truncated unary code, a truncated binary code, or Columbus coding. For example, if the quantity of combinations that needs to be indicated by the other_mode is not a power of 2, encoding may be performed in the foregoing coding manner.

In some implementations, first, it may be determined, according to the first_mode in the index information, whether the target combination is the first combination in the combinations allowed by the current block. If the target combination is not the first combination in the combinations allowed by the current block, the quantity of combinations except the first combination in the combinations allowed by the current block may be determined. For ease of description, in the following, numOtherModes is used to represent a quantity of remaining combinations. If numOtherModes is equal to 1 (that is, the combination allowed by the current block includes only one combination in addition to the first combination), encoding of the other_mode may be skipped. A current block is a block of 4×32 or 32×4 for example. As mentioned above, a quantity of combinations allowed by the block of 4×32 or 32×4 may be 2. Therefore, for such a current block, the encoding of the other_mode may be skipped if the target combination is not the first combination.

Further, in some implementations, if numOtherModes is greater than 1, other_mode may be encoded. The current block is a block of 8×N or N×8 (8≤N≤32), as mentioned above, the quantity of combinations allowed by the block of 8×N or N×8 may be 5. Therefore, for such a current block, if the target combination is not the first combination, the other_mode of two binary codes may be encoded to represent the target combination.

A more specific example is given below in conjunction with the code.

The encoding unit syntax (coding unit syntax) is as follows:

| coding_unit (x 0, y0, cbWidth, cbHeight, cqtDepth, treeType, modeType) ( | Descriptor |
|---|---|
| ... ... //Encode syntax elements associated with other modes prior to the extrapolation filtering-based intra prediction mode | |
| if (spsEipAllowed)//Encoding an extrapolation filter identifier when a higher-level syntax element, such as an SPS identifier, allows an extrapolation filter mode to be used | |
| cu_eip_flag[x0][y0] | ae(v) |
| if (cu_eip_flag) ( | |
| first_mode[x0][y0] | ae(v) |
| if (!first_mode [x0][y0]) ( | |
| if (numOtherModes > 1) | |
| other_mode [x0][y0] | ae(v) |
| ) | |
| ) | |
| else ...//Encode the subsequent prediction mode based on the extrapolation filtering intra prediction mode. | |
| ) | |

In some implementation manners, the method in FIG. 16 further includes: performing transformation on residual information to determine a transform coefficient; quantizing a transform coefficient to obtain a quantized coefficient; encoding the quantized coefficient, and writing the encoded bits into a bitstream.

There may be multiple transform manners. For example, the current block is a luma block, and a gradient histogram may be derived according to the luminance prediction value of the luma block. Then, a conventional intra prediction mode (such as an angular prediction mode) may be obtained according to a gradient histogram, and a group of secondary transform cores is selected by using the angle mode. Then, the corresponding transform core may be found in the secondary transform core corresponding to the group according to the decoded secondary transform index. For another example, the current block is a luma block, and a gradient histogram may be derived according to the luminance prediction value of the luma block. Then, a conventional intra prediction mode (such as an angular prediction mode) may be obtained according to a gradient histogram, and a group of primary transform cores is selected by using the angle mode. Then, the corresponding transform core may be determined according to the decoded primary transform index to perform transform.

The foregoing describes the method embodiments of this application in detail with reference to FIG. 1 to FIG. 16. The following describes the apparatus embodiments of this application in detail with reference to FIG. 17 to FIG. 20. It should be understood that the description of the method embodiment corresponds to the description of the apparatus embodiment. Therefore, for a part that is not described in detail, reference may be made to the foregoing method embodiments.

FIG. 17 is a schematic structural diagram of a decoder according to an embodiment of this application. As shown in FIG. 17, the decoder 1700 includes a decoding module 1710, a first determining module 1720, a second determining module 1730, and a prediction module 1740.

The decoding module 1710 is configured to parse a bitstream to determine first identification information and index information that corresponds to a current block, where the first identification information is used to indicate that a prediction mode of the current block is an intra prediction mode based on extrapolation filtering.

The first determining module 1720 is configured to determine a target combination from a combination allowed by the current block according to the index information. The combination allowed by the current block includes at least one combination, each of the combination corresponds to one type of reconstruction area and one extrapolation filter shape, the reconstruction area is used to obtain an extrapolation filter coefficient, and the combination allowed by the current block corresponds to the shape and/or the size of the current block.

The second determining module 1730 is configured to determine an extrapolation filtering coefficient according to the target combination.

The prediction module 1740 is configured to perform extrapolation filtering-based intra prediction on the current block according to the extrapolation filtering coefficient.

In some implementations, if the size of the current block is greater than or equal to a first size, the quantity of combinations allowed by the current block is a first quantity. If the size of the current block is less than the first size, the quantity of combinations allowed by the current block is less than the first quantity.

In some implementations, the first size is greater than or equal to $16 \times 16$.

In some implementations, the first quantity is 9.

In some implementations, the first quantity is the maximum value of a quantity of combinations allowed by a block to be predicted.

In some implementations, if the size of the current block is greater than or equal to the first size, the combination allowed by the current block includes one or more of the following combinations: a first combination, corresponding to a reconstruction region of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fourth combination, corresponding to a reconstruction area of a second type and the shape of the first extrapolation filter; a fifth combination, corresponding to the reconstruction area of the second type and the shape of the second extrapolation filter; a sixth combination, corresponding to the reconstruction area of the second type and the shape of the third extrapolation filter; a seventh combination, corresponding to the reconstruction area of the third type and the shape of the first extrapolation filter; an eighth combination, corresponding to the reconstruction area of the third type and the shape of the second extrapolation filter; and a ninth combination, corresponding to the reconstruction area of the third type and the shape of the third extrapolation filter.

In some implementation manners, the reconstruction area of the first type includes reconstruction areas located on a left side and an upper side of the to-be-predicted block, the reconstruction area of the second type is a reconstruction area located on the upper side of the to-be-predicted block, the reconstruction area of the third type is a reconstruction area located on the left side of the to-be-predicted block, the first extrapolation filter shape is $4 \times 4$, the second extrapolation filter shape is $2 \times 8$, and the third extrapolation filter shape is $8 \times 2$.

In some implementations, if the current block is a block of $4 \times N$ and/or $N \times 4$, the quantity of combinations allowed by the current block is less than or equal to a second quantity, the second quantity is less than the maximum value of the quantity of combinations allowed by the block to be predicted, and N is a positive integer less than or equal to 32.

In some implementations, if the current block is a block of $4 \times 32$, $4 \times 16$, $16 \times 4$, or $32 \times 4$, the quantity of combinations allowed by the current block is less than or equal to a third quantity, and the third quantity is less than the second quantity.

In some implementations, the third quantity is 2.

In some implementations, the second quantity is 3.

In some implementations, if the current block is a block of $4 \times 4$, $4 \times 8$, $4 \times 16$, $8 \times 4$, or $16 \times 4$, a combination allowed by the current block includes one or more of the following combinations: a first combination, corresponding to a reconstruction area of a first type and a shape of a first extrapolation filter; a second combination, corresponding to the reconstruction area of the first type and a shape of a second extrapolation filter; and a third combination, corresponding to the reconstruction area of the first type and a shape of a third extrapolation filter.

In some implementation manners, the reconstruction area of the first type includes a reconstruction area located on a left side and an upper side of a to-be-predicted block, the first extrapolation filter shape is $4 \times 4$, the second extrapolation filter shape is $2 \times 8$, and the third extrapolation filter shape is $8 \times 2$.

In some implementations, if the current block is a block of $4 \times 32$, a combination allowed by the current block includes one or more of the following combinations: a first combination, corresponding to a reconstruction area of a first type and a shape of a first extrapolation filter; and a third combination, corresponding to the reconstruction area of the first type and a shape of a third extrapolation filter.

In some implementation manners, the reconstruction area of the first type includes a reconstruction area located on an upper side and a left side of a to-be-predicted block, a shape of the first extrapolation filter is $4\times4$, and a shape of the third extrapolation filter is $8\times2$.

In some implementations, if the current block is a block of $32\times4$, the combination allowed by the current block includes one or more of the following combinations: a first combination, corresponding to a reconstruction area of a first type and a shape of a first extrapolation filter; or a second combination, corresponding to the reconstruction area of the first type and a shape of a second extrapolation filter.

In some implementation manners, the reconstruction area of the first type includes reconstruction areas located on an upper side and a left side of a to-be-predicted block, the shape of the first extrapolation filter is $4\times4$, and the shape of the second extrapolation filter is $2\times8$.

In some implementations, if the current block is a block of $8\times N$ and/or $N\times8$, the quantity of combinations allowed by the current block is less than or equal to a fourth quantity, the fourth quantity is less than the maximum value of the quantity of combinations allowed by the to-be-predicted block, N is a positive integer, and $8\leq N\leq32$.

In some implementations, if the current block is a block of $8\times32$ or $32\times8$, the quantity of combinations allowed by the current block is less than or equal to a fifth quantity.

In some implementations, the fifth quantity is 3.

In some implementations, the fourth quantity is 5.

In some implementations, if the current block is a block of $8\times8$, the combination allowed by the current block includes one or more of the following combinations: a first combination, corresponding to a reconstruction area of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fourth combination, corresponding to a reconstruction area of a second type and the shape of the first extrapolation filter; and a seventh combination, corresponding to a reconstruction area of a third type and the shape of the first extrapolation filter.

In some implementation manners, the reconstruction area of the first type includes reconstruction areas located on the upper side and the left side of the to-be-predicted block, the reconstruction area of the second type is a reconstruction area located on the upper side of the to-be-predicted block, the reconstruction area of the third type is a reconstruction area located on the left side of the to-be-predicted block, the shape of the first extrapolation filter is $4\times4$, the shape of the second extrapolation filter is $2\times8$, and the shape of the third extrapolation filter is $8\times2$.

In some implementations, if the current block is a block of $8\times16$ or $8\times32$, the combination allowed by the current block includes one or more of the following combinations: a first combination, corresponding to a reconstruction area of a first type and a shape of a first extrapolation filter; a second combination, corresponding to the reconstruction area of the first type and ae shape of a second extrapolation filter; a third combination, corresponding to the reconstruction area of the first type and a shape of ae third extrapolation filter; a seventh combination, corresponding to a reconstruction area of a third type and the shape of the first extrapolation filter e; or a ninth combination, corresponding to the reconstruction area of the third type and the shape of the third extrapolation filter.

In some implementation manners, the reconstruction area of the first type includes reconstruction areas located on an upper side and a left side of the to-be-predicted block, the reconstruction area of the third type is a reconstruction area located on the left side of the to-be-predicted block, the shape of the first extrapolation filter is $4\times4$, the shape of the second extrapolation filter is $2\times8$, and the shape of the third extrapolation filter is $8\times2$.

In some implementations, if the current block is a block of $16\times8$ or $32\times8$, the combination allowed by the current block includes one or more of the following combinations: a first combination, corresponding to a reconstruction region of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fifth combination, corresponding to a reconstruction area of a second type and the shape of the second extrapolation filter; or a seventh combination, corresponding to a reconstruction area of ae third type and the shape of the first extrapolation filter.

In some implementation manners, the reconstruction area of the first type includes reconstruction areas located on the upper side and the left side of the to-be-predicted block, the reconstruction area of the second type is a reconstruction area located on the upper side of the to-be-predicted block, the reconstruction area of the third type is a reconstruction area located on the left side of the to-be-predicted block, the shape of the first extrapolation filter is $4\times4$, the shape of the second extrapolation filter is $2\times8$, and the shape of the third extrapolation filter is $8\times2$.

In some implementations, for a first target prediction block, an intra prediction mode based on extrapolation filtering is disabled, and the first target prediction block includes one or more of the following: a block of $4\times4$; a block of $4\times N$; a block with a width greater than twice a height; or a block having a height greater than twice a width, where N is a positive integer less than or equal to 32.

In some implementations, for any to-be-predicted block that is allowed to use an intra-prediction mode based on extrapolation filtering, a combination allowed by the to-be-predicted block includes a first combination corresponding to a reconstruction region of a first type and a first filter shape.

In some implementation manners, the reconstruction area of the first type includes reconstruction areas located on an upper side and a left side of a to-be-predicted block, and the first filter shape is $4 \times 4$.

In some implementations, the index information includes second identification information, the second identification information is used to indicate whether the target combination is a first combination, and the first combination corresponds to a reconstruction area of a first type and a first filter shape.

In some implementation manners, the reconstruction area of the first type includes reconstruction areas located on an upper side and a left side of a to-be-predicted block, and the first filter shape is $4 \times 4$.

In some implementations, if the second identification information indicates that the target combination is not the first combination and/or that a quantity of combinations allowed by the current block is greater than 2, the index information further includes third identification information. The third identification information is used to indicate the target combination from combinations except the first combination in combinations allowed by the current block.

In some implementations, the decoding unit is further configured to: parse a bitstream to determine a quantized coefficient of the current block. The decoder 1700 further includes:

a third determining module, configured to perform dequantization on the quantized coefficient to determine a transform coefficient of the current block;

a fourth determining module, configured to perform inverse transform on the transform coefficient to determine residual information of the current block; and

a fifth determining module, configured to determine reconstruction information of the current block according to the prediction value and the residual information of the current block.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computerreadable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, applied to a decoder 1700, where the computer readable storage medium stores a computer program, and the computer program is executed by a processor to implement the decoding method in the foregoing first embodiment.

Based on the composition of the decoder 1700 and the computer readable storage medium, referring to FIG. 18, FIG. 18 shows a specific schematic structural diagram of hardware of the decoder 1700 according to an embodiment of this application. As shown in FIG. 18, the decoder 1800 may include a communications interface 1810, a memory 1820, and a processor 1830. Each component is coupled together by using a bus system 1840. It may be understood that the bus system 1840 is configured to implement connection and communication between these components. In addition to a data bus, the bus system 1840 further includes a power bus, a control bus, and a status signal bus. However, for clear description, various buses are marked as the bus system 1840 in FIG. 18.

The communications interface 1810 is configured to receive and transmit a signal in a process of transmitting and receiving information between the communications interface 1810 and another external network element.

The memory 1820 is configured to store a computer program.

The processor 1830 is configured to: when running the computer program, execute the following operations:

parsing a bitstream to determine a current point in a to-be-decoded point cloud; and
if the current point is a repetition point, determining a decoding manner of a symbol bit of a color residual of the current point according to a decoding sequence of color components of the current point.

It may be understood that the memory 1820 in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1820 of the system and method described in this application is intended to include but is not limited to these and any other suitable type of memory.

The processor 1830 may be an integrated circuit chip, and has a signal processing capability. In an implementation process, the steps in the foregoing methods may be completed by using an integrated logic circuit of hardware in the processor 1830 or an instruction in a form of software. The processor 1830 may be a general purpose processor, a digital signal processor (Digital Signal Processor, DSP), an application-specific integrated circuit (Application Specific Integrated Circuit, ASIC), a Field Programmable Gate Array (Field Programmable Gate Array, FPGA) or another programmable logic device, a discrete gate or transistor logic device, or a discrete hardware component. The processor can implement or execute the methods, steps and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an erasable programmable memory, or a register. The storage medium is located in the memory 1820. The processor 1830 reads information in the memory 1820 and completes the steps of the foregoing methods with reference to hardware of the processor 1830.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 1830 is further configured to execute the decoding method in the foregoing embodiment when running the computer program.

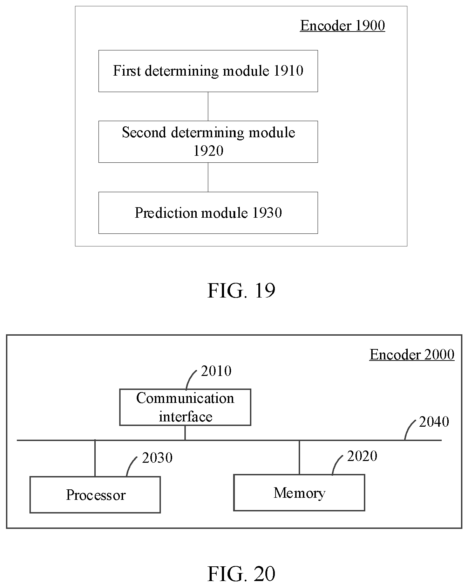

FIG. 19 is a schematic structural diagram of an encoder according to an embodiment of this application. As shown in FIG. 19, the encoder 1900 includes a first determining module 1910, a second determining module 1920, and a prediction module 1930.

The first determining module 1910 is configured to determine, according to a shape and/or a size of a current block, a combination allowed by the current block, where the combination allowed by the current block includes at least one combination, each of the combination corresponds to one type of reconstruction area and one extrapolation filter shape, and the reconstruction area is used to obtain an extrapolation filter coefficient.

The second determining module 1920 is configured to determine an extrapolation filtering coefficient according to a combination allowed by the current block.

The prediction module 1930 is configured to perform extrapolation filtering-based intra prediction on the current block according to the extrapolation filtering coefficient.

In some implementations, if the size of the current block is greater than or equal to a first size, the quantity of combinations allowed by the current block is a first quantity; or if the size of the current block is less than the first size, the quantity of combinations allowed by the current block is less than the first quantity.

In some implementations, the first size is greater than or equal to $16 \times 16$.

In some implementations, the first quantity is 9.

In some implementations, the first quantity is the maximum value of a quantity of combinations allowed by a block to be predicted.

In some implementations, if the size of the current block is greater than or equal to a first size, the combination allowed by the current block includes one or more of the following: a first combination, corresponding to a reconstruction region of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fourth combination, corresponding to a reconstruction area of a second type and the shape of the first extrapolation filter; a fifth combination, corresponding to a reconstruction area of a second type and the shape of the second extrapolation filter; a sixth combination, corresponding to the reconstruction area of the second type and the shape of the third extrapolation filter; a seventh combination, corresponding to a reconstruction area of a third type and the shape of the first extrapolation filter; an eighth combination, corresponding to the reconstruction area of the third type and the shape of the second extrapolation filter; or a ninth combination, corresponding to t the reconstruction area of the third type and the shape of the third extrapolation filter.

In some implementation manners, the reconstruction area of the first type includes reconstruction areas located on an upper side and a left side of the to-be-predicted block, the reconstruction area of the second type is a reconstruction area located on the upper side of the to-be-predicted block, the reconstruction area of the third type is a reconstruction area located on the left side of the to-be-predicted block, the shape of the first extrapolation filter is $4\times4$, the shape of the second extrapolation filter is $2\times8$, and the shape of the third extrapolation filter is $8\times2$.

In some implementations, if the current block is a block of $4\times N$ and/or $N\times4$, the quantity of combinations allowed by the current block is less than or equal to a second quantity, the second quantity is less than the maximum value of a quantity of combinations allowed by a block to be predicted, where N is a positive integer less than or equal to 32.

In some implementations, if the current block is a block of $4\times32$, $4\times16$, $16\times4$, or $32\times4$, the quantity of combinations allowed by the current block is less than or equal to a third quantity, and the third quantity is less than the second quantity.

In some implementations, the third quantity is 2.

In some implementations, the second quantity is 3.

In some implementations, if the current block is a block of $4\times4$, $4\times8$, $4\times16$, $8\times4$, or $16\times4$, the combination allowed by the current block includes one or more of the following combinations: a first combination, corresponding to a reconstruction area of a first type and a shape of a first extrapolation filter; a second combination, corresponding to the reconstruction area of the first type and a shape of a second extrapolation filter; or a third combination, corresponding to the reconstruction area of the first type and a shape of a third extrapolation filter.

In some implementation manners, the reconstruction area of the first type includes reconstruction areas located on an upper side and a left side of a to-be-predicted block, the first extrapolation filter shape is $4\times4$, the second extrapolation filter shape is $2\times8$, and the third extrapolation filter shape is $8\times2$.

In some implementations, if the current block is a block of $4\times32$, the combination allowed by the current block includes one or more of the following combinations: a first combination, corresponding to a reconstruction area of a first type and a shape of a first extrapolation filter; or a third combination, corresponding to the reconstruction area of the first type and a shape of a third extrapolation filter.

In some implementation manners, the reconstruction area of the first type includes reconstruction areas located on an upper side and a left side of a to-be-predicted block, the first extrapolation filter shape is $4\times4$, and the third extrapolation filter shape is $8\times2$.

In some implementations, if the current block is a block of $32\times4$, the combination allowed by the current block includes one or more of the following combinations: a first combination, corresponding to a reconstruction area of a first type and a shape of a first extrapolation filter; or a second combination, corresponding to the reconstruction area of the first type and a shape of a second extrapolation filter.

In some implementation manners, the reconstruction area of the first type includes reconstruction areas located on an upper side and a left side of a to-be-predicted block, the first extrapolation filter shape is $4\times4$, and the second extrapolation filter shape is $2\times8$.

In some implementations, if the current block is a block of $8\times N$ and/or $N\times8$, the quantity of combinations allowed by the current block is less than or equal to a fourth quantity, the fourth quantity is less than the maximum value of a quantity of combinations allowed by a to-be-predicted block, where N is a positive integer, and $8\leq N\leq32$.

In some implementations, if the current block is a block of $8\times32$ or $32\times8$, the quantity of combinations allowed by the current block is less than or equal to a fifth quantity.

In some implementations, the fifth quantity is 3.

In some implementations, the fourth quantity is 5.

In some implementations, if the current block is a block of $8\times8$, the combination allowed by the current block includes one or more of the following combinations: a first combination, corresponding to a reconstruction area of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fourth combination, corresponding to a reconstruction area of a second type and the shape of the first extrapolation filter; or a seventh combination, corresponding to a reconstruction area of a third type and the shape of the first extrapolation filter.

In some implementation manners, the reconstruction area of the first type includes reconstruction areas located on an upper side and a left side of the to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4\times4$, a shape of the second extrapolation filter is $2\times8$, and a shape of the third extrapolation filter is $8\times2$.

In some implementations, if the current block is a block of $8\times16$ or $8\times32$, the combination allowed by the current block includes one or more of the following combinations: a first combination, corresponding to a reconstruction area of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a seventh combination, corresponding to a reconstruction area of a third type and the shape of the first extrapolation filter; or a ninth combination, corresponding to the reconstruction area of the third type and the shape of the third extrapolation filter.

In some implementation manners, the reconstruction area of the first type includes reconstruction areas located on an upper side and a left side of the to-be-predicted block, the reconstruction area of the third type is a reconstruction area located on a left side of the to-be-predicted block, a shape of the first extrapolation filter is $4\times4$, a shape of the second extrapolation filter is $2\times8$, and a shape of the third extrapolation filter is $8\times2$.

In some implementations, if the current block is a block of $16\times8$ or $32\times8$, the combination allowed by the current block includes one or more of the following combinations: a first combination, corresponding to a reconstruction region of a first type and a shape of a first extrapolation filter; a second combination, corresponding to the reconstruction area of the first type and a shape of a second extrapolation filter; a third combination, corresponding to the reconstruction area of the first type and a shape of a third extrapolation filter; a fifth combination, corresponding to a reconstruction area of a second type and the shape of the second extrapolation filter; or a seventh combination, corresponding to a reconstruction area of a third type and the shape of the first extrapolation filter.

In some implementation manners, the reconstruction area of the first type includes reconstruction areas located on an upper side and a left side of the to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4\times4$, a shape of the second extrapolation filter is $2\times8$, and a shape of the third extrapolation filter is $8\times2$.

In some implementations, for a first target prediction block, an intra prediction mode based on extrapolation filtering is disabled, and the first target prediction block includes one or more of the following: a block of $4 \times 4$; a block of $4\times N$; a block with a width greater than twice a height; a block with a height greater than twice a width, where N is a positive integer less than or equal to 32.

In some implementations, for any to-be-predicted block that is allowed to use an intra-prediction mode based on extrapolation filtering, a combination allowed by the to-be-predicted block includes a first combination corresponding to a reconstruction region of a first type and a first filter shape.

In some implementation manners, the reconstruction area of the first type includes reconstruction areas located on an upper side and a left side of a to-be-predicted block, and the first filter shape is $4\times4$.

In some implementations, the encoder 1900 further includes a third determining unit and a first encoding unit. The third determining unit is configured to determine residual information of the current block according to a predicted value of the current block, where the predicted value of the current block is determined based on a target combination in the combination allowed by the current block. The first encoding unit is configured to encode first identification information and/or index information, and write encoded bits of the first identification information and/or the index information into a bitstream. The first identification information is used to indicate that the prediction mode of the current block is an intra prediction mode based on extrapolation filtering, and the index information is used to indicate the target combination.

In some implementations, the index information includes second identification information, the second identification information is used to indicate whether the target combination is a first combination, and the first combination corresponds to a reconstruction area of a first type and a first filter shape.

In some implementation manners, the reconstruction area of the first type includes reconstruction areas located on an upper side and a left side of a to-be-predicted block, and the first filter shape is $4\times4$.

In some implementations, if the second identification information indicates that the target combination is not the first combination and/or a quantity of combinations allowed by the current block is greater than 2, the index information further includes third identification information, and the third identification information is used to indicate the target combination from combinations except the first combination in combinations allowed by the current block.

In some implementations, the encoder 1900 further includes:

a fourth determining module, configured to perform transformation on the residual information to determine a transform coefficient;

a quantization module, configured to quantize the transform coefficient to obtain a quantized coefficient; and

a second encoding module, configured to encode the quantized coefficient, and write an encoded bit into a bitstream.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computerreadable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer readable storage medium, which is applied to an encoder 1900. The computer readable storage medium stores a computer program. When being executed by a processor, the computer program implements the decoding method in any one of the foregoing embodiments.

Based on a composition of the encoder 1900 and a computer readable storage medium, FIG. 20 shows a specific schematic structural diagram of hardware of the encoder 1900 according to an embodiment of this application. As shown in FIG. 20, the encoder 2000 may include a communications interface 2010, a memory 2020, and a processor 2030. The components are coupled together by using the bus system 2040. It may be understood that the bus system 2040 is configured to implement connection and communication between these components. In addition to a data bus, the bus system 2040 further includes a power bus, a control bus, and a status signal bus. However, for clear description, various buses are marked as the bus system 2040 in FIG. 20.

The communications interface 2010 is configured to receive and transmit a signal in a process of transmitting and receiving information between the communications interface 2010 and another external network element.

The memory 2020 is configured to store a computer program.

The processor 2030 is configured to: when running the computer program, execute the following operations:

determining a current point in a to-be-encoded point cloud; and
if the current point is a repetition point, determining an encoding manner of a symbol bit of a color residual of the current point according to the coding sequence of the color component of the current point.

It may be understood that the memory 2020 in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 2020 of the system and method described in this application is intended to include but is not limited to these and any other suitable type of memory.

The processor 2030 may be an integrated circuit chip, and has a signal processing capability. In an implementation process, the steps in the foregoing methods may be completed by using an integrated logic circuit of hardware in the processor 2030 or an instruction in a form of software. The processor 2030 may be a general purpose processor, a digital signal processor (Digital Signal Processor, DSP), an application specific integrated Circuit (Application Specific Integrated Circuit, ASIC), a field programmable gate array (Field Programmable Gate Array, FPGA) or another programmable logic device, a discrete gate or transistor logic device, or a discrete hardware component. The processor can implement or execute the methods, steps and logical block diagrams disclosed in embodiments of this application. The general purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an erasable programmable memory, or a register. The storage medium is located in the memory 2020. The processor 2030 reads information in the memory 2020 and completes the steps of the foregoing methods in combination with hardware of the processor 2030.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 2030 is further configured to execute the encoding method in the foregoing embodiments when running the computer program.

It should be noted that, in this application, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, the element defined by a statement of "includes a..." does not exclude another same element in a process, method, article, or apparatus that includes the element.

The foregoing sequence numbers of embodiments of this application are merely described, and do not represent advantages or disadvantages of the embodiments.

The disclosed methods provided in the several method embodiments of this application may be randomly combined with each other in the case of no conflicts, to obtain new method embodiments.

The disclosed features provided in the several product embodiments of this application may be randomly combined with each other in the case of no conflicts, to obtain new product embodiments.

The disclosed features provided in the several method or device embodiments of this application may be randomly combined with each other in the case of no conflicts, to obtain new method embodiments or device embodiments.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A decoding method, applied to a decoder, wherein the method comprises:

    parsing a bitstream to determine first identification information and index information that corresponds to a current block, wherein the first identification information is used to indicate that a prediction mode of the current block is an intra prediction mode based on extrapolation filtering; and
    determining a target combination from a combination allowed by the current block according to the index information, wherein the combination allowed by the current block comprises at least one combination, each of the combination corresponds to one type of reconstruction area and one extrapolation filter shape, the reconstruction area is used to obtain an extrapolation filter coefficient, and the combination allowed by the current block corresponds to a shape and/or a size of the current block;
    determining an extrapolation filtering coefficient according to the target combination; and
    performing extrapolation filtering-based intra prediction on the current block according to the extrapolation filtering coefficient.

2. The method according to claim 1, wherein:

    if a size of the current block is greater than or equal to a first size, a quantity of combination allowed by the current block is a first quantity; or
    if the size of the current block is less than the first size, a quantity of combination allowed by the current block is less than the first quantity.

3. The method according to claim 2, wherein the first size is greater than or equal to $16 \times 16$.

**4.** The method according to claim 2, wherein the first quantity is 9.

**5.** The method according to claim 2, wherein the first quantity is a maximum value of a quantity of a combination allowed by a to-be-predicted block.

**6.** The method according to claim 2, wherein if the size of the current block is greater than or equal to the first size, the combination allowed by the current block comprises one or more of the following:

a first combination, corresponding to a reconstruction area of a first type and a shape of a first extrapolation filter;
a second combination, corresponding to the reconstruction area of the first type and a shape of ae second extrapolation filter;
a third combination, corresponding to the reconstruction area of the first type and a shape of a third extrapolation filter;
a fourth combination, corresponding to a reconstruction area of a second type and the shape of the first extrapolation filter;
a fifth combination, corresponding to the reconstruction area of the second type and the shape of the second extrapolation filter;
a sixth combination, corresponding to the reconstruction area of the second type and the shape of the third extrapolation filter;
a seventh combination, corresponding to a reconstruction area of a third type and the shape of the first extrapolation filter;
an eighth combination, corresponding to the reconstruction area of the third type and the shape of the second extrapolation filter; or
a ninth combination, corresponding to the reconstruction area of the third type and the shape of the third extrapolation filter.

**7.** The method according to claim 6, wherein the reconstruction area of the first type comprises a reconstruction area located on a left side and an upper side of a to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4 \times 4$, a shape of the second extrapolation filter is $2 \times 8$, and a shape of the third extrapolation filter is $8 \times 2$.

**8.** The method according to claim 1, wherein
if the current block is a block of $4 \times N$ and/or $N \times 4$, the quantity of combination allowed by the current block is less than or equal to a second quantity, the second quantity is less than a maximum value of a quantity of combination allowed by a to-be-predicted block, and N is a positive integer less than or equal to 32.

**9.** The method according to claim 8, wherein
if the current block is a block of $4 \times 32$, $4 \times 16$, $16 \times 4$, or $32 \times 4$, the quantity of combination allowed by the current block is less than or equal to a third quantity, and the third quantity is less than the second quantity.

**10.** The method according to claim 9, wherein the third quantity is 2.

**11.** The method according to claim 8, wherein the second quantity is 3.

**12.** The method according to claim 8, wherein
if the current block is a block of $4 \times 4$, $4 \times 8$, $4 \times 16$, $8 \times 4$, or $16 \times 4$, the combination allowed by the current block comprises one or more of the following combinations:

a first combination, corresponding to a reconstruction area of a first type and a shape of a first extrapolation filter;
a second combination, corresponding to the reconstruction area of the first type and a shape of a second extrapolation filter; or
a third combination, corresponding to the reconstruction area of the first type and a shape of a third extrapolation filter.

**13.** The method according to claim 12, wherein the reconstruction area of the first type comprises a reconstruction area located on a left side and an upper side of the to-be-predicted block, the shape of the first extrapolation filter is $4 \times 4$, the shape of the second extrapolation filter is $2 \times 8$, and the shape of the third extrapolation filter is $8 \times 2$.

14. The method according to claim 8, wherein
if the current block is a block of $4\times32$, the combination allowed by the current block comprises one or more of the following combinations:

> a first combination, corresponding to a reconstruction area of a first type and a shape of a first extrapolation filter; or
> a third combination, corresponding to the reconstruction area of the first type and the shape of the third extrapolation filter.

15. The method according to claim 14, wherein the reconstruction area of the first type comprises a reconstruction area located on an upper side and a left side of the to-be-predicted block, a shape of the first extrapolation filter is $4\times4$, and a shape of the third extrapolation filter is $8\times2$.

16. The method according to claim 8, wherein
if the current block is a block of $32\times4$, the combination allowed by the current block comprises one or more of the following combinations:

> a first combination, corresponding to a reconstruction area of a first type and a shape of a first extrapolation filter; or
> a second combination, corresponding to the reconstruction area of the first type and a shape of a second extrapolation filter.

17. The method according to claim 16, wherein the reconstruction area of the first type comprises a reconstruction area located on an upper side and a left side of the to-be-predicted block, a shape of the first extrapolation filter is $4\times4$, and a shape of the second extrapolation filter is $2\times8$.

18. The method according to claim 1, wherein:
if the current block is a block of $8\times N$ and/or $N\times8$, the quantity of combination allowed by the current block is less than or equal to a fourth quantity, the fourth quantity is less than a maximum value of a quantity of combination allowed by a to-be-predicted block, N is a positive integer, and $8\leq N\leq32$.

19. The method according to claim 18, wherein
if the current block is a block of $8\times32$ or $32\times8$, the quantity of combination allowed by the current block is less than or equal to a fifth quantity.

20. The method according to claim 19, wherein the fifth quantity is 3.

21. The method according to claim 18, wherein the fourth quantity is 5.

22. The method according to claim 18, wherein if the current block is a block of $8\times8$, the combination allowed by the current block comprises one or more of the following combinations:

> a first combination, corresponding to a reconstruction area of a first type and a shape of a first extrapolation filter;
> a second combination, corresponding to the reconstruction area of the first type and a shape of a second extrapolation filter;
> a third combination, corresponding to the reconstruction area of the first type and a shape of a third extrapolation filter;
> a fourth combination, corresponding to a reconstruction area of a second type and the shape of the first extrapolation filter; or
> a seventh combination, corresponding to a reconstruction area of a third type and the shape of the first extrapolation filter.

23. The method according to claim 22, wherein the reconstruction area of the first type comprises reconstruction areas located on an upper side and a left side of the to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4\times4$, a shape of the second extrapolation filter is $2\times8$, and a shape of the third extrapolation filter is $8\times2$.

24. The method according to claim 18, wherein if the current block is a block of 8×16 or 8×32, the combination allowed by the current block comprises one or more of the following combinations:

> a first combination, corresponding to a reconstruction area of a first type and a shape of a first extrapolation filter;
> a second combination, corresponding to the reconstruction area of the first type and a shape of a second extrapolation filter; and
> a third combination, corresponding to the reconstruction area of the first type and a shape of the third extrapolation filter;
> a seventh combination, corresponding to a reconstruction area of a third type and the shape of the first extrapolation filter; or
> a ninth combination, corresponding to the reconstruction area of the third type and the shape of the third extrapolation filter.

25. The method according to claim 24, wherein the reconstruction area of the first type comprises a reconstruction area located on an upper side and a left side of a to-be-predicted block, the reconstruction area of the third type is a reconstruction area located on the left side of the to-be-predicted block, a shape of the first extrapolation filter is 4 × 4, a shape of the second extrapolation filter is 2×8, and a shape of the third extrapolation filter is 8×2.

26. The method according to claim 18, wherein if the current block is a block of 16×8 or 32×8, the combination allowed by the current block comprises one or more of the following combinations:

> a first combination, corresponding to a reconstruction area of a first type and a shape of a first extrapolation filter;
> a second combination, corresponding to the reconstruction area of the first type and a shape of a second extrapolation filter;
> a third combination, corresponding to the reconstruction area of the first type and a shape of a third extrapolation filter;
> a fifth combination, corresponding to a reconstruction area of a second type and the shape of the second extrapolation filter; or
> a seventh combination, corresponding to a reconstruction area of a third type and the shape of the first extrapolation filter.

27. The method according to claim 26, wherein the reconstruction area of the first type comprises reconstruction areas located on an upper side and a left side of a to-be-predicted block, the reconstruction area of the second type is a reconstruction area located on an upper side of the to-be-predicted block, the reconstruction area of the third type is a reconstruction area located on a left side of the to-be-predicted block, a shape of the first extrapolation filter is 4 × 4, a shape of the second extrapolation filter is 2×8, and a shape of the third extrapolation filter is 8×2.

28. The method according to claim 1, wherein for a first target prediction block, an extrapolation filtering-based intra prediction mode is disabled, and the first target prediction block comprises one or more of the following:

> a block of 4 × 4;
> a block of 4×N;
> a block having a width greater than twice a height; or
> a block having a height greater than twice a width,
> wherein N is a positive integer less than or equal to 32.

29. The method according to claim 1, wherein for any to-be-predicted block that is allowed to use an extrapolation filter-based intra-prediction mode, a combination allowed by the to-be-predicted block comprises a first combination corresponding to a reconstruction region of a first type and a shape of a first filter.

30. The method according to claim 29, wherein the reconstruction area of the first type comprises reconstruction areas located on an upper side and a left side of the to-be-predicted block, and the shape of the first filter shape is 4 × 4.

31. The method according to claim 1, wherein the index information comprises second identification information, the second identification information is used to indicate whether the target combination is a first combination, and the first combination corresponds to a reconstruction area of a first type and a shape of a first filter.

32. The method according to claim 31, wherein the reconstruction area of the first type comprises reconstruction areas located on an upper side and a left side of a to-be-predicted block, and the shape of the first filter is 4 × 4.

33. The method according to claim 31 or 32, wherein if the second identification information indicates that the target combination is not the first combination and/or that a quantity of combination allowed by a current block is greater than 2, the index information further comprises third identification information, and the third identification information is used to indicate the target combination from a combination except the first combination among the combination allowed by the current block.

34. The method according to claim 1, further comprising:

parsing a bitstream to determine a quantized coefficient of the current block;
performing dequantization on the quantized coefficient to determine a transform coefficient of the current block;
performing inverse transformation on the transform coefficient to determine residual information of the current block; and
determining reconstruction information of the current block according to the prediction value and the residual information of the current block.

35. An encoding method, applied to an encoder, wherein the method comprises:

determining, according to a shape and/or a size of a current block, a combination allowed by the current block, wherein the combination allowed by the current block comprises at least one combination, each of the combination corresponds to one type of reconstruction area and one extrapolation filter shape, and the reconstruction area is used to obtain an extrapolation filter coefficient;
determining an extrapolation filtering coefficient according to the combination allowed by the current block; and
performing extrapolation filtering-based intra prediction on the current block according to the extrapolation filtering coefficient.

36. The method according to claim 35, wherein

if a size of the current block is greater than or equal to a first size, a quantity of combination allowed by the current block is a first quantity; or
if the size of the current block is less than the first size, the quantity of combination allowed by the current block is less than the first quantity.

37. The method according to claim 36, wherein the first size is greater than or equal to 16 × 16.

38. The method according to claim 36, wherein the first quantity is 9.

39. The method according to claim 36, wherein the first quantity is a maximum value of a quantity of combination allowed by a to-be-predicted block.

40. The method according to claim 36, wherein if the size of the current block is greater than or equal to the first size, the combination allowed by the current block comprises one or more of the following:

a first combination, corresponding to a reconstruction area of a first type and a shape of a first extrapolation filter;
a second combination, corresponding to the reconstruction area of the first type and a shape of ae second extrapolation filter;
a third combination, corresponding to the reconstruction area of the first type and a shape of a third extrapolation filter;
a fourth combination, corresponding to a reconstruction area of a second type and the shape of the first extrapolation filter;
a fifth combination, corresponding to the reconstruction area of the second type and the shape of the second extrapolation filter;
a sixth combination, corresponding to the reconstruction area of the second type and the shape of the third extrapolation filter;
a seventh combination, corresponding to a reconstruction area of a third type and the shape of the first extrapolation filter;
an eighth combination, corresponding to the reconstruction area of the third type and the shape of the second extrapolation filter; or
a ninth combination, corresponding to the reconstruction area of the third type and the shape of the third extrapolation filter.

**41.** The method according to claim 40, wherein the reconstruction area of the first type comprises a reconstruction area located on a left side and an upper side of a to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4 \times 4$, a shape of the second extrapolation filter is $2 \times 8$, and a shape of the third extrapolation filter is $8 \times 2$.

**42.** The method according to claim 35, wherein
if the current block is a block of $4 \times N$ and/or $N \times 4$, the quantity of combination allowed by the current block is less than or equal to a second quantity, the second quantity is less than a maximum value of a quantity of combination allowed by a to-be-predicted block, and N is a positive integer less than or equal to 32.

**43.** The method according to claim 42, wherein:
if the current block is a block of $4 \times 32$, $4 \times 16$, $16 \times 4$, or $32 \times 4$, the quantity of combination allowed by the current block is less than or equal to a third quantity, and the third quantity is less than the second quantity.

**44.** The method according to claim 43, wherein the third quantity is 2.

**45.** The method according to claim 42, wherein the second quantity is 3.

**46.** The method according to claim 42, wherein:
if the current block is a block of $4 \times 4$, $4 \times 8$, $4 \times 16$, $8 \times 4$, or $16 \times 4$, the combination allowed by the current block comprises one or more of the following combinations:

a first combination, corresponding to a reconstruction area of a first type and a shape of a first extrapolation filter;
a second combination, corresponding to the reconstruction area of the first type and a shape of a second extrapolation filter; or
a third combination, corresponding to the reconstruction area of the first type and a shape of a third extrapolation filter.

**47.** The method according to claim 46, wherein the reconstruction area of the first type comprises a reconstruction area located on a left side and an upper side of the to-be-predicted block, the shape of the first extrapolation filter is $4 \times 4$, the shape of the second extrapolation filter is $2 \times 8$, and the shape of the third extrapolation filter is $8 \times 2$.

**48.** The method according to claim 42, wherein
if the current block is a block of $4 \times 32$, the combination allowed by the current block comprises one or more of the following combinations:

a first combination, corresponding to a reconstruction area of a first type and a shape of a first extrapolation filter; or
a third combination, corresponding to the reconstruction area of the first type and the shape of the third extrapolation filter.

**49.** The method according to claim 48, wherein the reconstruction area of the first type comprises a reconstruction area located on an upper side and a left side of the to-be-predicted block, a shape of the first extrapolation filter is $4 \times 4$, and a shape of the third extrapolation filter is $8 \times 2$.

**50.** The method according to claim 42, wherein
if the current block is a block of $32 \times 4$, the combination allowed by the current block comprises one or more of the following combinations:

a first combination, corresponding to a reconstruction area of a first type and a shape of a first extrapolation filter; or
a second combination, corresponding to the reconstruction area of the first type and a shape of a second extrapolation filter.

51. The method according to claim 50, wherein the reconstruction area of the first type comprises a reconstruction area located on an upper side and a left side of the to-be-predicted block, a shape of the first extrapolation filter is $4 \times 4$, and a shape of the second extrapolation filter is $2 \times 8$.

52. The method according to claim 35, wherein
if the current block is a block of $8 \times N$ and/or $N \times 8$, a quantity of combination allowed by the current block is less than or equal to a fourth quantity, the fourth quantity is less than a maximum value of a quantity of combination allowed by a to-be-predicted block, N is a positive integer, and $8 \leq N \leq 32$.

53. The method according to claim 52, wherein
if the current block is a block of $8 \times 32$ or $32 \times 8$, the quantity of combination allowed by the current block is less than or equal to a fifth quantity.

54. The method according to claim 53, wherein the fifth quantity is 3.

55. The method according to claim 52, wherein the fourth quantity is 5.

56. The method according to claim 52, wherein if the current block is a block of $8 \times 8$, the combination allowed by the current block comprises one or more of the following combinations:

a first combination, corresponding to a reconstruction area of a first type and a shape of a first extrapolation filter;
a second combination, corresponding to the reconstruction area of the first type and a shape of a second extrapolation filter;
a third combination, corresponding to the reconstruction area of the first type and a shape of a third extrapolation filter;
a fourth combination, corresponding to a reconstruction area of a second type and the shape of the first extrapolation filter; or
a seventh combination, corresponding to a reconstruction area of a third type and the shape of the first extrapolation filter.

57. The method according to claim 56, wherein the reconstruction area of the first type comprises a reconstruction area located on an upper side and a left side of the to-be-predicted block, the reconstruction area of the second type is a reconstruction area located on the upper side of the to-be-predicted block, the reconstruction area of the third type is a reconstruction area located on the left side of the to-be-predicted block, a shape of the first extrapolation filter is $4 \times 4$, a shape of the second extrapolation filter is $2 \times 8$, and a shape of the third extrapolation filter is $8 \times 2$.

58. The method according to claim 52, wherein if the current block is a block of $8 \times 16$ or $8 \times 32$, the combination allowed by the current block comprises one or more of the following combinations:

a first combination, corresponding to a reconstruction area of a first type and a shape of a first extrapolation filter;
a second combination, corresponding to the reconstruction area of the first type and a shape of a second extrapolation filter; and
a third combination, corresponding to the reconstruction area of the first type and a shape of the third extrapolation filter;
a seventh combination, corresponding to a reconstruction area of a third type and the shape of the first extrapolation filter; or
a ninth combination, corresponding to the reconstruction area of the third type and the shape of the third extrapolation filter.

59. The method according to claim 58, wherein the reconstruction area of the first type comprises a reconstruction area located on an upper side and a left side of a to-be-predicted block, the reconstruction area of the third type is a reconstruction area located on the left side of the to-be-predicted block, a shape of the first extrapolation filter is $4 \times 4$, a shape of the second extrapolation filter is $2 \times 8$, and a shape of the third extrapolation filter is $8 \times 2$.

60. The method according to claim 52, wherein: wherein if the current block is a block of $16 \times 8$ or $32 \times 8$, the combination allowed by the current block comprises one or more of the following combinations:

a first combination, corresponding to a reconstruction area of a first type and a shape of a first extrapolation filter;

a second combination, corresponding to the reconstruction area of the first type and a shape of a second extrapolation filter;

a third combination, corresponding to the reconstruction area of the first type and a shape of a third extrapolation filter;

a fifth combination, corresponding to a reconstruction area of a second type and the shape of the second extrapolation filter; or

a seventh combination, corresponding to a reconstruction area of a third type and the shape of the first extrapolation filter.

61. The method according to claim 60, wherein the reconstruction area of the first type comprises a reconstruction area located on an upper side and a left side of a to-be-predicted block, the reconstruction area of the second type is a reconstruction area located on an upper side of the to-be-predicted block, the reconstruction area of the third type is a reconstruction area located on a left side of the to-be-predicted block, a shape of the first extrapolation filter is 4×4, a shape of the second extrapolation filter is 2×8, and a shape of the third extrapolation filter is 8×2.

62. The method according to claim 35, wherein for a first target prediction block, an extrapolation filtering-based intra prediction mode is disabled, and the first target prediction block comprises one or more of the following:

a block of 4 × 4;
a block of 4×N;
a block having a width greater than twice a height; or
a block having a height greater than twice a width,
wherein N is a positive integer less than or equal to 32.

63. The method according to claim 35, wherein for any to-be-predicted block that is allowed to use an extrapolation filter-based intra-prediction mode, a combination allowed by the to-be-predicted block comprises a first combination corresponding to a reconstruction region of a first type and a shape of a first filter.

64. The method according to claim 63, wherein the reconstruction area of the first type comprises reconstruction areas located on an upper side and a left side of a to-be-predicted block, and the shape of the first filter is 4 × 4.

65. The method according to claim 35, further comprising:

determining residual information of the current block according to a predicted value of the current block, wherein the predicted value of the current block is determined based on a target combination in the combination allowed by the current block; and
encoding first identification information and/or index information, and writing encoded bits of the first identification information and/or the index information into a bitstream,
wherein the first identification information is used to indicate that the prediction mode of the current block is an intra prediction mode based on extrapolation filtering, and the index information is used to indicate the target combination.

66. The method according to claim 65, wherein the index information comprises second identification information, the second identification information is used to indicate whether the target combination is a first combination, and the first combination corresponds to a reconstruction area of a first type and a shape pf a first filter.

67. The method according to claim 66, wherein the reconstruction area of the first type comprises a reconstruction area located on an upper side and a left side of a to-be-predicted block, and the shape of the first filter is 4 × 4.

68. The method according to claim 66 or 67, wherein if the second identification information indicates that the target combination is not the first combination and/or that a quantity of combination allowed by the current block is greater than 2, the index information further comprises third identification information, and the third identification information is used to indicate the target combination from a combination except the first combination among combination allowed by the current block.

69. The method according to claim 65, further comprising:

performing transformation on the residual information to determine a transform coefficient;

quantizing the transform coefficient to obtain a quantized coefficient; and
encoding the quantized coefficient, and writing the encoded bit into a bitstream.

**70.** A decoder, comprising:

a decoding module, configured to parse a bitstream to determine first identification information and index information that corresponds to a current block, wherein the first identification information is used to indicate that a prediction mode of the current block is an intra prediction mode based on extrapolation filtering;
a first determining module, configured to determine a target combination from a combination allowed by the current block according to the index information, wherein the combination allowed by the current block comprises at least one combination, each of the combination corresponds to one type of reconstruction area and one extrapolation filter shape, the reconstruction area is used to obtain an extrapolation filter coefficient, and the combination allowed by the current block corresponds to a shape and/or a size of the current block;
a second determining module, configured to determine an extrapolation filtering coefficient according to the target combination; and
a prediction module, configured to perform extrapolation filtering-based intra prediction on the current block according to the extrapolation filtering coefficient.

**71.** A decoder, comprising:

a memory, configured to store a computer program; and
a processor, configured to execute the method according to any one of claims 1 to 34 when running the computer program.

**72.** An encoder, comprising:

a first determining module, configured to determine, according to a shape and/or a size of a current block, a combination allowed by the current block, wherein the combination allowed by the current block comprises at least one combination, each of the combination corresponds to one type of reconstruction area and one extrapolation filter shape, and the reconstruction area is used to obtain an extrapolation filter coefficient;
a second determining module, configured to determine an extrapolation filtering coefficient according to the combination allowed by the current block; and
a prediction module, configured to perform extrapolation filtering-based intra prediction on the current block according to the extrapolation filtering coefficient.

**73.** An encoder, comprising:

a memory, configured to store a computer program; and
a processor, configured to execute the method according to any one of claims 35 to 69 when running the computer program.

**74.** A computer readable storage medium, wherein the computer readable storage medium stores a computer program, and when the computer program is executed, the method according to any one of claims 1 to 34 or the method according to any one of claims 35 to 69 is implemented.

Video encoder 100
Input video stream

120 Residual block

Prediction block

Prediction unit 110

Inter prediction unit 111

Intra prediction unit 112

150 Reconstruction block

Transform/quantization unit 130

Quantized transform coefficient

Inverse transform/quantization unit 140

Loop filtering unit 160

Decoded picture buffer 170

Entropy encoding unit 180

Bitstream

FIG. 1

Video decoder
200

Prediction
unit 220

Inter prediction
unit 221

Intra prediction
unit 222

Bitstream

Entropy decoding
unit
210

Inverse
quantization/trans
form unit 230

240

Loop filtering
unit 250

Decoded
picture buffer
260

Video
Data

FIG. 2

Filter width

Filter
height

Filter 3a

Filter width

Filter
height

Filter 3b

Filter width

Filter
height

Filter 3c

FIG. 3

FIG. 4A

FIG. 4B

FIG. 4C

FIG. 5A

FIG. 5B

FIG. 6A

FIG. 6B

FIG. 7

FIG. 8

FIG. 9

To-be-predicted block

To-be-predicted block

FIG. 10

EIP_FILTER_S          EIP_FILTER_H          EIP_FILTER_V

FIG. 11

EIP_AL_A_L       EIP_AL_A       EIP_AL_L

FIG. 12

(EIP_AL_A_L, EIP_FILTER_S)    (EIP_AL_A_L, EIP_FILTER_V)    (EIP_AL_A_L, EIP_FILTER_H)

FIG. 13A

(EIP_AL_A, EIP_FILTER_S)    (EIP_AL_A, EIP_FILTER_V)    (EIP_AL_A, EIP_FILTER_H)

FIG. 13B

To-be-
predicted
block

To-be-
predicted
block

To-be-
predicted
block

(EIP_AL_L, EIP_FILTER_S)    (EIP_AL_L, EIP_FILTER_V)    (EIP_AL_L, EIP_FILTER_H)

FIG. 13C

| Parsing a bitstream to determine first identification information and index information that corresponds to a current block | S1410 |

| Determining a target combination from a combination allowed by the current block according to the index information | S1420 |

| Determining an extrapolation filtering coefficient according to the target combination | S1430 |

| Performing extrapolation filtering-based intra prediction on the current block according to the extrapolation filtering coefficient | S1430 |

FIG. 14

X

Y

To-be-predicted
block

FIG. 15

Determining, according to a shape and/or a size of a current block, a combination allowed by the current block

Determining an extrapolation filtering coefficient according to the combination allowed by the current block

Performing extrapolation filtering-based intra prediction on the current block according to the extrapolation filtering coefficient

S1610

S1620

S1630

FIG. 16

Decoder 1700

Decoding module 1710

First determining module 1720

Second determining module 1730

Prediction module 1740

FIG. 17

Decoder 1800

1810

Communication interface

1840

1830

1820

Processor

Memory

FIG. 18

Encoder 1900

First determining module 1910

Second determining module 1920

Prediction module 1930

FIG. 19

Encoder 2000

2010

Communication interface

2040

2030

Processor

2020

Memory

FIG. 20

## INTERNATIONAL SEARCH REPORT

| International application No. |
|---|
| **PCT/CN2023/119981** |

**A. CLASSIFICATION OF SUBJECT MATTER**

H04N19/117(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, WPABSC, ENTXTC, DWPI, ENTXT, CNKI, IEEE, JVET: 编码单元, 解码单元, 块, 宽高, 尺寸, 形状, 大小, 个数, 滤波, 数量, 数目, 索引, 映射, 标识, Coding Unit, Decoding Unit, Block, Width, Height, Size, Shape, Number, Filter, Index, Mapping, Identification

**C. DOCUMENTS CONSIDERED TO BE RELEVANT**

| Category* | Citation of document, with indication, where appropriate, of the relevant passages | Relevant to claim No. |
|---|---|---|
| X | KR 20220081300 A (ELECTRONICS AND TELECOMMUNICATIONS RESEARCH INSTITUTE et al.) 15 June 2022 (2022-06-15) <br> description, paragraphs 759-761 and 789-876 | 35, 62, 63, 65, 69, 72-74 |
| Y | KR 20220081300 A (ELECTRONICS AND TELECOMMUNICATIONS RESEARCH INSTITUTE et al.) 15 June 2022 (2022-06-15) <br> description, paragraphs 759-761 and 789-876 | 1-5, 8-11, 18-21, 29, 34, 36-39, 42-45, 52-55, 70, 71 |
| Y | CN 116250240 A (GUANGDONG OPPO MOBILE TELECOMMUNICATIONS CORP., LTD.) 09 June 2023 (2023-06-09) <br> claim 1 | 1-5, 8-11, 18-21, 29, 34, 36-39, 42-45, 52-55, 70, 71 |
| Y | CN 111615828 A (ELECTRONICS AND TELECOMMUNICATIONS RESEARCH INSTITUTE) 01 September 2020 (2020-09-01) <br> description, paragraphs 558 and 571 | 2-5, 8-11, 18-21, 36-39, 42-45, 52-55 |
| A | KR 20170125155 A (INTELLECTUAL DISCOVERY CO., LTD.) 14 November 2017 (2017-11-14) <br> entire document | 1-74 |

☑ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 June 2024** | **05 June 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/119981** |

### C. DOCUMENTS CONSIDERED TO BE RELEVANT

| Category* | Citation of document, with indication, where appropriate, of the relevant passages | Relevant to claim No. |
|---|---|---|
| A | US 2020288158 A1 (QUALCOMM INC.) 10 September 2020 (2020-09-10)<br>entire document | 1-74 |

Form PCT/ISA/210 (second sheet) (July 2022)

## INTERNATIONAL SEARCH REPORT
### Information on patent family members

International application No.

**PCT/CN2023/119981**

| Patent document cited in search report | | | Publication date (day/month/year) | Patent family member(s) | | | Publication date (day/month/year) |
|---|---|---|---|---|---|---|---|
| KR | 20220081300 | A | 15 June 2022 | None | | | |
| CN | 116250240 | A | 09 June 2023 | WO | 2022022622 | A1 | 03 February 2022 |
| | | | | TW | 202209878 | A | 01 March 2022 |
| CN | 111615828 | A | 01 September 2020 | JP | 2021505074 | A | 15 February 2021 |
| | | | | JP | 7330184 | B2 | 21 August 2023 |
| | | | | US | 2022295058 | A1 | 15 September 2022 |
| | | | | US | 11943436 | B2 | 26 March 2024 |
| | | | | KR | 20190063452 | A | 07 June 2019 |
| | | | | KR | 102643115 | B1 | 04 March 2024 |
| | | | | WO | 2019107994 | A1 | 06 June 2019 |
| | | | | US | 2021218962 | A1 | 15 July 2021 |
| | | | | US | 11290715 | B2 | 29 March 2022 |
| | | | | JP | 2023138676 | A | 02 October 2023 |
| | | | | EP | 3720129 | A1 | 07 October 2020 |
| | | | | EP | 3720129 | A4 | 25 August 2021 |
| KR | 20170125155 | A | 14 November 2017 | KR | 20230126694 | A | 30 August 2023 |
| US | 2020288158 | A1 | 10 September 2020 | None | | | |

Form PCT/ISA/210 (patent family annex) (July 2022)